# EUROPEAN PATENT APPLICATION

(11) **EP 4 354 914 A1**
(43) Date of publication of application: **17.04.2024**
(21) Application number: 22819388.4
(22) Date of filing: 27.05.2022
(51) Int. Cl.: H04W 4/50, H04W 24/02

(54) **COMMUNICATION METHOD AND APPARATUS**

(30) Priority: 07.06.2021 CN 202110633975; 02.07.2021 CN 202110750254
(71) Applicant: Huawei Technologies Co., Ltd., Longgang Shenzhen, Guangdong 518129 (CN)
(72) Inventor: LI, Chenwan, Shenzhen, Guangdong 518129 (CN); CHEN, Lei, Shenzhen, Guangdong 518129 (CN); XU, Bin, Shenzhen, Guangdong 518129 (CN); YU, Feng, Shenzhen, Guangdong 518129 (CN)
(74) Representative: Epping - Hermann - Fischer
(86) International application number: PCT/CN2022/095700
(87) International publication number: WO 2022/257790

(57) **Abstract**

This application provides a communication method and apparatus, to improve transmission reliability and a transmission rate. The method includes: An access network device determines first information for configuring a data transmission rule of a first service, and send the first information to a first terminal device in N terminal devices, where the N terminal devices are related to the first service, and N is an integer greater than 1. Based on control on an access network side, data of the first service may be transmitted on the N terminal devices based on the configured data transmission rule, and the access network device can flexibly configure the data transmission rule, so that a data transmission rule that meets requirements, such as high reliability and a high rate, of the first service can be configured, to improve transmission performance of the first service.

## Description

### CROSS-REFERENCE TO RELATED APPLICATIONS

This application claims priority to Chinese Patent Application No. 202110633975.8, filed with the China National Intellectual Property Administration on June 07, 2021 and entitled "COMMUNICATION METHOD AND APPARATUS", which is incorporated herein by reference in its entirety. This application claims priority to Chinese Patent Application No. 202110750254.5, filed with the China National Intellectual Property Administration on July 02, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a new radio (new radio, NR) system, massive machine connection application scenarios such as an industrial scenario, an intelligent monitoring scenario, and a device defect detection scenario are introduced. Such application implements massive and fast data transmission, thereby implementing real-time remote sensing, telemetering, and management over everything.

The industrial scenario is used as an example for description. A data transmission process is as follows: A programmable logic controller (programmable logic controller, PLC) sends generated data to a terminal device, the terminal device sends the data to an access network and a core network, and then a core network device sends the data to a server. The server may manage various types of mechanical or production processes in the industrial scenario. In the industrial scenario, a reliability requirement and a transmission rate requirement for a service are high. However, limited by costs, transmission reliability and a transmission rate of a conventional terminal device cannot meet a requirement for a related service, and consequently, transmission performance is low. Similarly, in the intelligent monitoring scenario and the device defect detection scenario, there are also high requirements for data transmission reliability and a high rate. Therefore, how to improve transmission reliability and a transmission rate is a problem to be urgently resolved.

### SUMMARY

This application provides a communication method and apparatus, to improve transmission reliability and a transmission rate.

According to a first aspect, this application provides a communication method. The method may be performed by an access network device, or may be performed by a chip or a circuit. The method includes: determining first information for configuring a data transmission rule of a first service, and sending the first information to a first terminal device in N terminal devices, where the N terminal devices are related to the first service, and N is an integer greater than 1.

In this embodiment of this application, based on control on an access network side, data of the first service may be transmitted on the N terminal devices based on the configured data transmission rule, and the access network device can flexibly configure the data transmission rule, so that a data transmission rule that meets requirements, such as high reliability and a high rate, of the first service can be configured, to improve transmission performance of the first service.

In a possible design, configuration information from a first core network device is received, and the configuration information indicates that the N terminal devices are related to the first service. In the foregoing design, the access network device may determine a terminal device associated with the first service, so that the N terminal devices may be controlled to transmit the first service in a coordinated manner, to improve the transmission performance of the first service.

In a possible design, the configuration information may include configuration information of the N terminal devices, where configuration information of each terminal device includes identification information of the first service. The configuration information of the terminal device includes an identifier of the first service, so that a correlation relationship (a binding relationship, an association relationship, or the like) between the terminal device and the first service may be indicated.

In a possible design, the configuration information may include configuration information of the first service, where the configuration information may carry identification information of the N terminal devices. The identification information of the N terminal devices is carried in the configuration information of the first service, so that a correlation relationship (a binding relationship, an association relationship, or the like) between the N terminal devices and the first service may be indicated.

In a possible design, the data transmission rule is determined based on a transmission mode of the first service. In the foregoing design, the data transmission rule may better meet the requirements of the first service.

In a possible design, the transmission mode of the first service may be determined based on at least one of the following: quality of a channel between the access network device and at least one of the N terminal devices, a working status of the at least one of the N terminal devices, and a quality of service QoS requirement of the first service. In the foregoing design, the data transmission rule may be determined based on a service requirement of the first service, air interface quality of the terminal device, a working status of the terminal device, and the like, so that the N terminal devices may implement a function of backup or traffic distribution based on the service requirement or the air interface quality. In this way, service transmission reliability and a transmission rate may be improved.

In a possible design, the transmission mode of the first service may be determined based on first indication information received from the first core network device, where the first indication information indicates the transmission mode corresponding to the first service. In the foregoing design, the access network device may configure a data transmission rule that meets the transmission mode of the first service.

In a possible design, the transmission mode may be a first mode. In the first mode, the N terminal devices include at least one primary terminal device and at least one backup terminal device, and the backup terminal device is configured to transmit the first service when all or some of the at least one primary terminal device is faulty. In the foregoing design, when the primary terminal device that transmits the first service is faulty, the backup terminal device may continue to transmit the first service, so that reliability of the first service may be ensured. In addition, in the first mode, the backup terminal device starts to transmit the first service when the primary terminal device is faulty, so that resources may be saved, and system efficiency is improved.

In a possible design, the transmission mode may be a second mode. In the second mode, all the N terminal devices transmit the first service, and the N terminal devices transmit a same data packet. In the foregoing design, a plurality of terminal devices transmit same data of the first service, so that reliability of the first service may be ensured.

In a possible design, the transmission mode may be a third mode. In the third mode, all the N terminal devices transmit the first service, and the N terminal devices transmit different data packets. In the foregoing design, the plurality of terminal devices transmit different data of the first service, so that a transmission rate of the first service may be ensured.

In a possible design, the transmission mode may be a fourth mode. In the fourth mode, all the N terminal devices transmit the first service, and a same data packet and different data packets exist in data packets transmitted by the first terminal device and data packets transmitted by a second terminal device in the N terminal devices. The foregoing modes may improve the reliability, and may also improve the transmission rate.

In a possible design, the first information includes at least one of a first value corresponding to the first terminal device and a threshold, and the first value and the threshold are used to determine the data packet transmitted by the first terminal device. In the foregoing design, the first terminal device may determine, based on a sequence number of the data packet, the first value, and the threshold, whether the data packet needs to be sent, that is, whether the data packet is included in a to-be-sent data packet.

In a possible design, the first information indicates whether the first terminal device sends the data packet of the first service. In the foregoing design, the first terminal device may determine whether the first service needs to be transmitted.

In a possible design, a packet data convergence protocol (PDCP) status report or a first sequence number may be further sent to the first terminal device, where the PDCP status report indicates a successfully received data packet and/or an unsuccessfully received data packet, and the first sequence number is a sequence number of a 1^{st} data packet to be sent by the first terminal device or a sequence number corresponding to a data packet to be sent by the first terminal device. In the foregoing design, the first terminal device may determine a start data packet to be sent.

In a possible design, the first information indicates the first terminal device to send a data packet whose sequence number is an odd number or an even number. In the foregoing design, the first terminal device may determine, based on the sequence number of the data packet, whether the data packet needs to be sent, that is, whether the data packet is included in the to-be-sent data packet. In a possible design, the first information indicates a traffic distribution proportion of the first terminal device, and the traffic distribution proportion is a proportion of a quantity of data packets to be sent by the first terminal device in k data packets to k. In the foregoing design, the first terminal device may determine the quantity of data packets to be sent.

In a possible design, the first information further includes at least one of the following: a location of a data packet and a value of k, where the location of the data packet indicates a location of the data packet to be sent by the first terminal device in the k data packets. In the foregoing design, the first terminal device may determine a specific location of the data packet to be sent.

In a possible design, the first information indicates a range of a sequence number of the data packet to be sent by the first terminal device. In the foregoing design, the first terminal device may determine the data packet to be sent.

In a possible design, the data packet of the first service may be further received, where the data packet is from at least one of the N terminal devices; the received data packet is deduplicated and resorted; and a deduplicated and resorted data packet is sent to a second core network device. In the foregoing design, only one piece of data is sent between the access network device and a core network device, and there is no repetition, disorder, or the like.

In a possible design, when it is determined that the first terminal device fails to send the first data packet, the second terminal device in the N terminal devices may further be indicated to send the first data packet. In the foregoing design, the terminal device may transmit a data packet other than the to-be-sent data packet of the terminal device, so that transmission reliability may be improved. In a possible design, when it is determined that the first terminal device fails to send the first data packet, second indication information from the first terminal device may be received, where the second indication information indicates that the first terminal device does not receive or does not successfully send the first data packet. "Not successfully send" may be understood as that the first terminal device does not receive the first data packet from an application layer, and consequently cannot send the first data packet to the access network device. In the foregoing design, the access network device may timely schedule another terminal device to upload the first data packet, so that the reliability may be improved.

In a possible design, a buffer status report (BSR) from the first terminal device is determined, where the BSR indicates an amount of data buffered by the first terminal device; a quantity of data packets to be sent by the first terminal device is determined based on the data transmission rule and the BSR; and an uplink resource is allocated to the first terminal device based on the quantity of data packets to be sent by the first terminal device. In the foregoing design, the access network device may allocate the uplink resource based on a data amount of the data packet to be sent by the terminal device, to avoid allocating too many or too few transmission resources to the terminal device, so that resource allocation appropriateness may be improved, and resource utilization is improved.

In a possible design, third indication information may be further sent to the first terminal device, where the third indication information indicates sending of the BSR. In the foregoing design, the access network device may indicate some terminal devices to report the BSR, and remaining terminal devices may not report the BSR, so that signaling overheads can be reduced.

In a possible design, fourth indication information may be further sent to at least one of the remaining terminal devices, where the fourth indication information indicates not to send the BSR, and the remaining terminal devices are terminal devices in the N terminal devices other than the first terminal device. In the foregoing design, the remaining terminal devices may not report the BSR, so that the signaling overheads can be reduced.

In a possible design, second information may be further sent to the first terminal device, where the second information is used to configure a data radio bearer of the first service.

According to a second aspect, this application provides a communication method. The method may be performed by a first terminal device, or may be performed by a chip or a circuit. The method includes: receiving first information from an access network device, where the first information is used to configure a data transmission rule of a first service, the first service is related to N terminal devices, N is an integer greater than 1, and the N terminal devices include the first terminal device; and determining a to-be-sent data packet of the first service based on the data transmission rule, and sending the to-be-sent data packet to the access network device, where the to-be-sent data packet is at least one data packet to be sent by the first terminal device.

In this embodiment of this application, based on control on an access network side, data of the first service is transmitted on the N terminal devices, and the access network device may configure a data transmission rule of the N terminal devices, so that a data transmission rule that meets requirements, such as high reliability and a high rate, of the first service can be configured, to improve transmission performance of the first service.

In a possible design, the data transmission rule is determined based on a transmission mode of the first service. In the foregoing design, the data transmission rule may better meet the requirements of the first service.

In a possible design, the transmission mode may be a first mode. In the first mode, the N terminal devices include at least one primary terminal device and at least one backup terminal device, and the backup terminal device is configured to transmit the first service when all or some of the at least one primary terminal device is faulty. In the foregoing design, when the primary terminal device that transmits the first service is faulty, the backup terminal device may continue to transmit the first service, so that reliability of the first service may be ensured. In addition, in the first mode, the backup terminal device starts to transmit the first service when the primary terminal device is faulty, so that resources may be saved, and system efficiency is improved.

In a possible design, the transmission mode may be a second mode. In the second mode, all the N terminal devices transmit the first service, and the N terminal devices transmit a same data packet. In the foregoing design, a plurality of terminal devices transmit same data of the first service, so that reliability of the first service may be ensured.

In a possible design, the transmission mode may be a third mode. In the third mode, all the N terminal devices transmit the first service, and the N terminal devices transmit different data packets. In the foregoing design, the plurality of terminal devices transmit different data of the first service, so that a transmission rate of the first service may be ensured.

In a possible design, the transmission mode may be a fourth mode. In the fourth mode, all the N terminal devices transmit the first service, and a same data packet and different data packets exist in data packets transmitted by the first terminal device and data packets transmitted by a second terminal device in the N terminal devices. The foregoing modes may improve the reliability, and may also improve the transmission rate.

In a possible design, the first information includes at least one of a first value corresponding to the first terminal device and a threshold, and the first value and the threshold are used to determine the data packet transmitted by the first terminal device. In the foregoing design, the first terminal device may determine, based on a sequence number of the data packet, the first value, and the threshold, whether the data packet needs to be sent, that is, whether the data packet is included in the to-be-sent data packet.

In a possible design, the first information indicates whether the first terminal device sends a data packet of the first service. In the foregoing design, the first terminal device may determine whether the first service needs to be transmitted.

In a possible design, a PDCP status report or a first sequence number may be further received, where the PDCP status report indicates a successfully received data packet and/or an unsuccessfully received data packet, and the first sequence number is a sequence number of a 1^{st} data packet to be sent by the first terminal device or a sequence number corresponding to a data packet to be sent by the first terminal device. In the foregoing design, the first terminal device may determine a start data packet to be sent.

In a possible design, the first information indicates the first terminal device to send a data packet whose sequence number is an odd number or an even number. In the foregoing design, the first terminal device may determine, based on the sequence number of the data packet, whether the data packet needs to be sent, that is, whether the data packet is included in the to-be-sent data packet. In a possible design, the first information indicates a traffic distribution proportion of the first terminal device, and the traffic distribution proportion is a proportion of a quantity of data packets to be sent by the first terminal device in k data packets to k. In the foregoing design, the first terminal device may determine the quantity of data packets to be sent.

In a possible design, the first information further includes at least one of the following: a location of a data packet and a value of k, where the location of the data packet indicates a location of the data packet to be sent by the first terminal device in the k data packets. In the foregoing design, the first terminal device may determine a specific location of the data packet to be sent.

In a possible design, the first information indicates a range of a sequence number of the data packet to be sent by the first terminal device. In the foregoing design, the first terminal device may determine the data packet to be sent.

In a possible design, before the to-be-sent data packet of the first service is determined based on the data transmission rule, M data packets of the first service may be received, where M is an integer greater than 0, and the to-be-sent data packet is determined based on the M data packets. In the foregoing design, the first terminal device may send all or some of the M data packets based on the data transmission rule.

In a possible design, before the to-be-sent data packet is sent to the access network device, the to-be-sent data packet may be numbered based on a receiving order of the M data packets or sequence numbers carried in the M data packets. In the foregoing design, a uniform data sequence number arrangement of data from the application layer to an access layer may be implemented.

In a possible design, indication information from the access network device may be further received, where the indication information indicates sending of a second data packet, and the second data packet does not belong to the to-be-sent data packet. In the foregoing design, the terminal device may transmit a data packet other than the to-be-sent data packet of the terminal device, so that transmission reliability may be improved.

In a possible design, before the to-be-sent data packet is sent to the access network device, the M data packets may be further buffered; a quantity of to-be-sent data packets is determined based on second configuration information and M; and a first buffer status report (BSR) is sent to the access network device, where the first BSR indicates the quantity of to-be-sent data packets.

In the foregoing design, the first terminal device may determine a data amount of the first terminal device based on the data transmission rule, to indicate, when reporting a BSR, an amount of data to be sent by the first terminal device, so that the access network device may allocate an uplink resource to the first terminal device based on a data amount corresponding to the data packet to be transmitted by the first terminal device. In this way, accuracy of resource allocation may be improved, and a resource waste is reduced.

In a possible design, before the to-be-sent data packet is sent to the access network device, the to-be-sent data packet may further be buffered; and a second BSR is sent to the access network device, where the second BSR indicates a quantity of buffered data packets.

In the foregoing design, the terminal device may determine the data amount of the terminal device based on the data transmission rule, and buffer only the data packet to be sent by the terminal device, to indicate, when reporting the BSR, the amount of data to be sent by the terminal device, so that the access network device may allocate the uplink resource to the terminal device based on the data amount corresponding to the data packet to be transmitted by the terminal device. In this way, the accuracy of resource allocation may be improved, utilization of a storage resource of the terminal device may be improved, and the resource waste can be reduced.

In a possible design, before the to-be-sent data packet is sent to the access network device, third indication information from the access network device may be further received, where the third indication information indicates sending of the BSR; the M data packets are buffered; and a third BSR is sent to the access network device, where the third BSR indicates an amount of data buffered by the first terminal device.

In the foregoing design, because the access network device has delivered the data transmission rule to the terminal device, and the terminal device receives same data packet of the first service, the access network device may infer, based on the BSR reported by the first terminal device, a data amount corresponding to each terminal device, and then may allocate an uplink resource to each terminal device based on the corresponding data amount. In this way, the accuracy of resource allocation may be improved, and the resource waste can be reduced.

In a possible design, before the third BSR is sent to the access network device, the third indication information from the access network device may be received, where the third indication information indicates sending of the BSR. In the foregoing design, the access network device may indicate some terminal devices to report the BSR, and remaining terminal devices may not report the BSR, so that signaling overheads can be reduced.

In a possible design, fourth indication information from the access network device may be further received, where the fourth indication information indicates not to send the BSR. Therefore, the first terminal device may not trigger reporting of the BSR, and in the foregoing design, the signaling overheads can be reduced.

In a possible design, second information from the access network device may be further received, where the second information is used to configure a data radio bearer of the first service; and the data radio bearer of the first service is configured based on the second information.

According to a third aspect, this application provides a communication method. The method may be performed by an access network device, or may be performed by a chip or a circuit. The method includes: First information is received, where the first information indicates a QoS requirement of a first service. The access network device determines a QoS requirement actually corresponding to a first terminal device in N terminal devices. QoS of the first terminal device is lower than the QoS requirement of the first service. N terminal devices are related to the first service, and N is an integer greater than 1. In this embodiment of this application, the QoS of the first terminal device is reduced, so that a resource used by the first terminal device to transmit the first service can be reduced. In this way, resource consumption can be reduced.

In a possible design, the first information includes at least one of the following: 5G QoS identifier (5QI) information, an allocation and retention priority (ARP), a guaranteed bit rate (GBR), and an aggregate maximum bit rate (AMBR).

In a possible design, the method further includes: When a transmission parameter is configured based on the QoS actually corresponding to the first terminal device, an MCS used by the first terminal device to transmit the first service may be increased. In the foregoing manner, a higher MCS is configured for the first terminal device, so that the QoS of the terminal device can be reduced.

In a possible design, the method further includes: When the transmission parameter is configured based on the QoS actually corresponding to the first terminal device, a time-frequency resource used by the first terminal device to transmit the first service can be reduced. In the foregoing manner, fewer time-frequency resources are configured for the first terminal device, so that a data transmission rate can be reduced, and the QoS of the terminal device is reduced.

In a possible design, the method further includes: When the transmission parameter is configured based on the QoS actually corresponding to the first terminal device, a quantity of times the first terminal device repeatedly transmit the first service can be reduced. In the foregoing manner, a smaller quantity of repeated transmissions is configured for the first terminal device, so that data transmission reliability can be reduced, and the QoS of the first terminal device is reduced.

In a possible design, the method further includes: receiving a first data packet from the first terminal device. If a second terminal device fails to send the first data packet, indication information may be sent to the second terminal device, where the indication information indicates the second terminal device not to retransmit the first data packet.

In a possible design, the indication information may be an ACK indication or an indication of not sending a retransmission, or the indication information may be a PDCP status report, and a state of the first data packet in the PDCP status report is that the first data packet is successfully sent. In a possible design, the method further includes: deduplicating and resorting data packets from the N terminal devices, and then sending the deduplicated and resorted data packets to a core network device.

In a possible design, the method further includes: when it is determined that the first terminal device works abnormally, improving QoS of at least one terminal device that works normally in the N terminal devices. In the foregoing design, when a terminal device fault occurs, QoS of remaining terminal devices is improved, so that reliability of the first service may be ensured.

In a possible design, if a quantity of terminal devices that work normally in the N terminal devices is greater than 1, QoS of the terminal devices that work normally may be maintained unchanged, or QoS of all or some of the terminal devices that are in the terminal devices and that do not work abnormally is improved, and after improvement, average QoS of the terminal devices that work normally is lower than the QoS requirement of the first service.

In a possible design, if the quantity of terminal devices that work normally in the N terminal devices is equal to 1, QoS of the terminal device may be improved, so that the QoS of the terminal device meets the QoS requirement of the first service.

In a possible design, the improving the QoS of the terminal device includes: reducing the MCS used by the terminal device to transmit the first service.

In a possible design, the improving the QoS of the terminal device includes: increasing the time-frequency resource used by the terminal device to transmit the first service.

In a possible design, the improving the QoS of the terminal device includes: increasing a quantity of times the terminal device repeatedly transmits the first service.

According to a fourth aspect, this application further provides a communication apparatus, and the communication apparatus implements any method provided in the first aspect or the third aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing corresponding functions of the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a network device.

In a possible design, the communication apparatus includes corresponding functional modules that are respectively configured to implement steps in the foregoing method. The functions may be implemented by hardware, or may be implemented by hardware executing corresponding software. The hardware or software includes one or more modules corresponding to the foregoing functions. In a possible design, a structure of the communication apparatus includes a processing unit and a communication unit. These units may perform corresponding functions in the foregoing method examples. For details, refer to descriptions in the method provided in the first aspect or the third aspect. Details are not described herein again.

According to a fifth aspect, this application further provides a communication apparatus. The communication apparatus implements any method provided in the second aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing corresponding functions of the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a network device.

In a possible design, the communication apparatus includes corresponding functional modules that are respectively configured to implement steps in the foregoing method. The functions may be implemented by hardware, or may be implemented by hardware executing corresponding software. The hardware or software includes one or more modules corresponding to the foregoing functions. In a possible design, a structure of the communication apparatus includes a processing unit and a communication unit. These units may perform corresponding functions in the foregoing method examples. For details, refer to descriptions in the method provided in the second aspect. Details are not described herein again.

According to a sixth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect, the third aspect, and the possible designs by using a logic circuit or by executing code instructions.

According to a seventh aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the second aspect and the possible designs by using a logic circuit or by executing code instructions.

According to an eighth aspect, a computer-readable storage medium is provided. The computer-readable storage medium stores a computer program or instructions. When the computer program or the instructions is/are executed by a processor, the method in any one of the first aspect and the possible designs, the method in any one of the second aspect and the possible designs, or the method in any one of the third aspect and the possible designs is implemented.

According to a ninth aspect, a computer program product storing instructions is provided. When the instructions are run by a processor, the method in any one of the first aspect and the possible designs, the method in any one of the second aspect and the possible designs, or the method in any one of the third aspect and the possible designs is implemented.

According to a tenth aspect, a chip system is provided. The chip system includes a processor, may further include a memory, and is configured to implement the method in any one of the first aspect and the possible designs, the method in any one of the second aspect and the possible designs, or the method in any one of the third aspect and the possible designs. The chip system may include a chip, or may include a chip and another discrete device.

According to an eleventh aspect, a communication system is provided. The system includes an apparatus (for example, an access network device) and N terminal devices according to the first aspect, where the N terminal devices include an apparatus (for example, a first terminal device) according to the second aspect.

According to a twelfth aspect, a communication system is provided. The system includes an apparatus (for example, an access network device) and N terminal devices according to the third aspect, where the N terminal devices are related to a first service.

### BRIEF DESCRIPTION OF DRAWINGS

FIG. 1 is a schematic diagram of a network protocol stack according to an embodiment of this application;
FIG. 2 is a schematic diagram of backup transmission according to an embodiment of this application;
FIG. 3 is a schematic diagram of an architecture of a communication system according to an embodiment of this application;
FIG. 4 is a schematic flowchart of a communication method according to an embodiment of this application;
FIG. 5 is a schematic diagram of resorting according to an embodiment of this application;
FIG. 6 is a schematic diagram of an application scenario according to an embodiment of this application;
FIG. 7 is a schematic flowchart of data transmission according to an embodiment of this application;
FIG. 8 is a schematic diagram of data transmission according to an embodiment of this application;
FIG. 9 is another schematic diagram of data transmission according to an embodiment of this application;
FIG. 10 is another schematic diagram of data transmission according to an embodiment of this application;
FIG. 11 is a schematic diagram of packet loss according to an embodiment of this application;
FIG. 12A is a schematic flowchart of another communication method according to an embodiment of this application;
FIG. 12B is a schematic diagram of a structure of a communication apparatus according to an embodiment of this application; and
FIG. 13 is a schematic diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

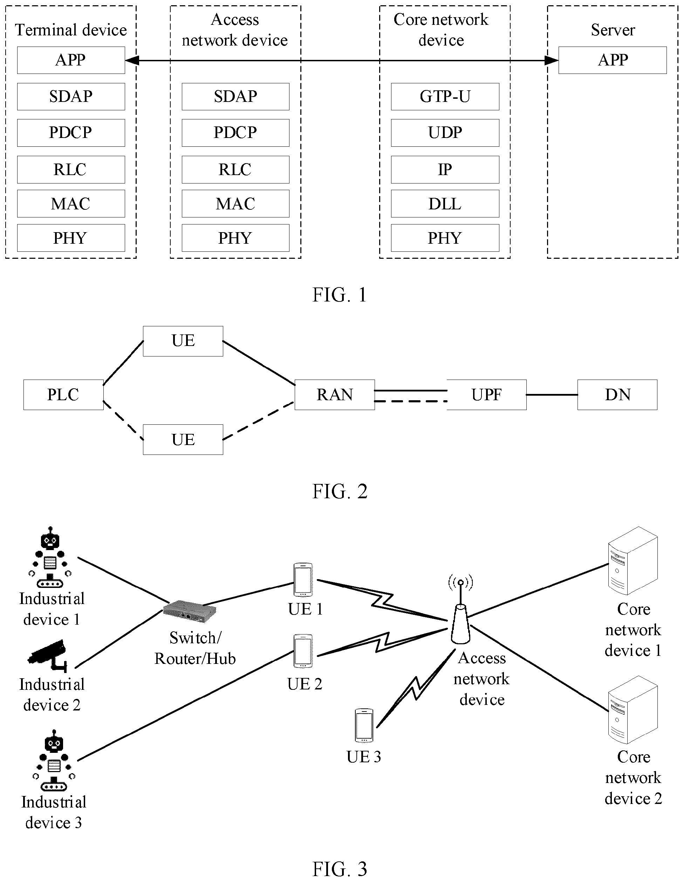

In the following, some terms in embodiments of this application are explained and described, to facilitate understanding of a person skilled in the art.
(1) Network protocol architecture: As shown in FIG. 1, a network protocol stack includes an application (application, APP) layer, a service data adaptation protocol (service data adaptation protocol, SDAP), a packet data convergence layer protocol (packet data convergence protocol, PDCP), a radio link control (radio link control, RLC) layer, a media access control (media access control, MAC) layer, and a physical (physical, PHY) layer. The APP layer is above the SDAP layer, the SDAP layer is above the PDCP layer, the PDCP layer is above the RLC layer, the RLC layer is above the MAC layer, and the MAC layer is above the PHY layer. A protocol stack of a core network device includes: a general packet radio service (general packet radio service, GPRS) tunneling protocol for a user plane (GPRS tunneling protocol for a user plane, GTP-U) layer, a user datagram protocol (user datagram protocol, UDP) layer, an internet protocol (internet protocol, IP) layer, a data link layer (data link layer, DLL), and a PHY layer. The GTP-U layer is above the UDP layer, the UDP layer is above the IP layer, the IP layer is above the data link layer, and the data link layer is above the physical layer. A server (server) includes an APP layer. A packet generated at the APP layer may be a transmission control protocol (transmission control protocol, TCP)/IP packet, or may be a MAC packet in an Ethernet (Ethernet) protocol, or may be another packet. This is not limited herein. It should be understood that the foregoing listed protocol layers are merely examples, and do not specifically limit a protocol layer included in a network protocol stack.
(2) Multicast technology: Multicast is a technology in which an access network device sends data on one resource, and a plurality of terminal devices together receive the data. The access network device generally notifies, in a broadcast or unicast manner, the terminal device of a multicast service supported by the access network device. Content of the notification may include a temporary mobile group identify (temporary mobile group identity, TMGI) TMGI, a group radio network temporary identifier (group radio network temporary identifier, G-RNTI), and configuration information for detecting a G-RNTI, for example, detecting a time-frequency location and detecting a periodicity. It should be understood that the foregoing content of the notification is merely an example, and does not limit specific content notified by the access network device to the terminal device.
(3) Buffer status report (buffer status report, BSR) technology: Currently, in a wireless communication system, data communication between a terminal device and an access network device is implemented by performing resource scheduling by the access network device for the terminal device. For example, when new data or data with higher priority arrives at a logical channel of the terminal device, a BSR is triggered. If there is no directly available uplink resource, the terminal device first sends an uplink scheduling request (scheduling request, SR) to request a resource from the access network device. After receiving the SR, the access network device allocates a resource of a specific size to the terminal device for reporting the BSR. The terminal device sends the BSR on the allocated resource to indicate an amount of data to be sent by the terminal device, so that the access network device further determines, based on the BSR, a size of a resource that is allocated to the terminal device for transmitting the data.

BSR assembly: When there is an available uplink resource, a terminal device needs to assemble a BSR. Specifically, data amount (buffer size, BS) information of all to-be-sent data in a logical channel group of the terminal device is encapsulated into a BSR MAC control element (control element, CE) and is sent on an uplink resource. The BSR reporting may be performed based on the logical channel group, to reflect a total data amount in all logical channels in the logical channel group. For example, the BSR may report an index value, and the index value corresponds to a range of a data size instead of an accurate uplink data amount.

In embodiments of this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a-b, a-c, b-c, or a-b-c, where a, b, and c may be singular or plural.

In addition, unless otherwise specified, ordinal numbers such as "first" and "second" mentioned in embodiments of this application are used to distinguish between a plurality of objects, but are not used to limit sizes, content, orders, time sequences, priorities, importance degrees, or the like of the plurality of objects. For example, first information and second information are merely used to distinguish between different information, but do not indicate different content, priorities, importance degrees, or the like of the two pieces of information.

The foregoing describes some terms in embodiments of this application. The following describes technical features in embodiments of this application.

In an NR system, application scenarios of massive machine connections are introduced. Such application implements massive and fast data transmission, thereby implementing real-time remote sensing, telemetering, and management over everything. For example, in application scenarios such as an industrial scenario, an intelligent monitoring scenario, and a device defect detection scenario, a reliability requirement for a service is high. However, limited by costs, reliability of hardware and software of an existing terminal device cannot meet a requirement for a related service. How to ensure that service transmission is not affected when a terminal is faulty is a problem to be urgently resolved. A possible solution is as follows: As shown in FIG. 2, an internet of things device (for example, a device (for example, a programmable logic controller (programmable logic controller, PLC)) that controls various types of mechanical or production processes in the industrial scenario, a monitoring device (for example, a camera) in the intelligent monitoring scenario, or a detection device in the device defect detection scenario) may separately send a data packet to two terminal devices, and the two terminal devices send the same data packet to an access network and a core network, to arrive at a data destination end through the core network, to be specific, the data destination end is a server of the internet of things (for example, a server configured to manage various types of mechanical or production processes in the industrial scenario). Similarly, downlink data may arrive at the two terminal devices through the core network and the access network, the two terminal devices send the downlink data to the internet of things device, and the internet of things device processes related data. In the foregoing manner, even if one terminal device is faulty, a service is not affected. However, in the foregoing manner, a same piece of data needs to be transmitted from the terminal devices to the access network and the core network, that is, the same piece of data is transmitted twice. Consequently, double air interface resources, transmission resources, station processing resources, UE power resources, and the like are to be consumed. However, a fault of the terminal device is occasional, and consuming a large quantity of resources for a long time for an occasional event reduces system efficiency.

In addition, in an application scenario of machine connection, a transmission rate requirement for data is high. For example, in an industrial scenario, there is a control unit in which a large quantity of high-definition camera services are to be backhauled, to monitor industrial production in real time. In addition, backhaul of a high-definition video generated by a high-definition camera requires extremely high transmission bandwidth. A single terminal device cannot ensure backhaul of a video service at a high rate due to limited power and a limited hardware capability. Therefore, how to achieve high-rate transmission is also a problem to be urgently resolved.

On this basis, embodiments of this application provide two communication methods and apparatuses. In embodiments of this application, an access network device may indicate a data transmission rule of a plurality of terminal devices based on a transmission mode of a service (or a transmission requirement, air interface quality of the terminal devices, or the like). For example, if the transmission mode of the service is high-reliability transmission (or the transmission requirement of the service is high reliability), the access network device may indicate the plurality of terminal devices to transmit a same data packet for the service, to ensure the reliability of the service. If the transmission mode of the service is high-rate transmission (or the transmission requirement of the service is a high rate), the access network device may indicate the plurality of terminal devices to transmit different data packets for the service, to improve a transmission rate. In the foregoing manner, the access network device may flexibly control transmission manners of the plurality of terminal devices, so that backup or traffic distribution may be implemented based on a service requirement (or the air interface quality of the terminal devices). In this way, high-reliability transmission and high-rate transmission of the service may be implemented.

The communication methods provided in this application may be applied to various communication systems, for example, the internet of things (internet of things, IoT), narrow band internet of things (narrow band internet of things, NB-IoT), long term evolution (long term evolution, LTE), a 5th generation (5th generation, 5G) communication system, an LTE-5G hybrid architecture, or a 6G communication system or a new communication system emerging in future communication development. Alternatively, the communication system may be a machine to machine (machine to machine, M2M) network, machine type communication (machine type communication, MTC), or another network.

For example, the communication methods provided in embodiments of this application may be applied to a communication system shown in FIG. 3. The communication system includes: core network devices (for example, a core network device 1 and a core network device 2), an access network device, a switch/router/hub, terminal devices (for example, UE 1 to UE 3), and industrial devices (for example, an industrial device 1 to an industrial device 3). In the communication system, the industrial device 1 and the industrial device 2 are connected to the UE 1 through the switch/router/hub, and the industrial device 3 is connected to the UE 2. The UE 1, the UE 2, and the UE 3 are connected to the access network device through a radio link, and the access network device is connected to the core network device 1 and the core network device 2. It should be understood that FIG. 3 is merely an example architecture of the communication system, and does not specifically limit types, forms, quantities, connection relationships, and the like of communication devices included in the communication system.

Embodiments of this application may also be applied to another communication system, provided that a data transmitting end in the communication system transmits data to a data receiving end through the terminal device, the access network device, and the core network device.

The foregoing terminal device may be an entity that is on a user side and that is configured to receive or transmit a signal, and may also be referred to as user equipment (user equipment, UE), an access terminal, a subscriber unit, a subscriber station, a mobile station, a mobile console, a remote station, a remote terminal, a mobile device, a user terminal, a wireless communication device, a user agent, or a user apparatus. The terminal device in embodiments of this application may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in video surveillance, a wearable terminal device, a customer-premises equipment (customer-premises equipment, CPE), or the like.

In embodiments of this application, an apparatus configured to implement a function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete device. In the technical solutions provided in embodiments of this application, the technical solutions provided in embodiments of this application are described by using an example in which the apparatus configured to implement the function of the terminal is a terminal device.

The access network device may be an entity that is on a network side and that is configured to transmit or receive a signal, for example, a device that is in an access network and that communicates with a wireless terminal device over an air interface by using one or more cells. The access network device may be a next generation nodeB (next Generation NodeB, gNB) in an NR system, an evolved NodeB (evolved NodeB, eNB) in an LTE system, or the like. In embodiments of this application, an apparatus configured to implement a function of the access network device may be the access network device, or may be an apparatus, for example, a chip system, that can support the access network device in implementing the function. The apparatus may be installed in the access network device. In the technical solutions provided in embodiments of this application, the technical solutions provided in embodiments of this application are described by using an example in which the apparatus configured to implement the function of the access network device is the access network device.

The core network device may be a general term of a plurality of function entities that is on a network side and that is configured to manage users, data transmission, and access network device configuration, and includes an access and mobility management function (access and mobility management function, AMF), a user plane function (user plane function, UPF), a session management function (session management function, SMF), and the like.

The industrial device may be a device used in the industrial scenario, and is responsible for generating and processing some control data, for example, a PLC or a camera.

A network architecture and service scenarios described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

The following describes technical solutions in embodiments of this application with reference to accompanying drawings in embodiments of this application. The method may be applied to a scenario in which a data sending end sends data to a data receiving end through a terminal device, an access network device, and a core network device, for example, an industrial scenario.

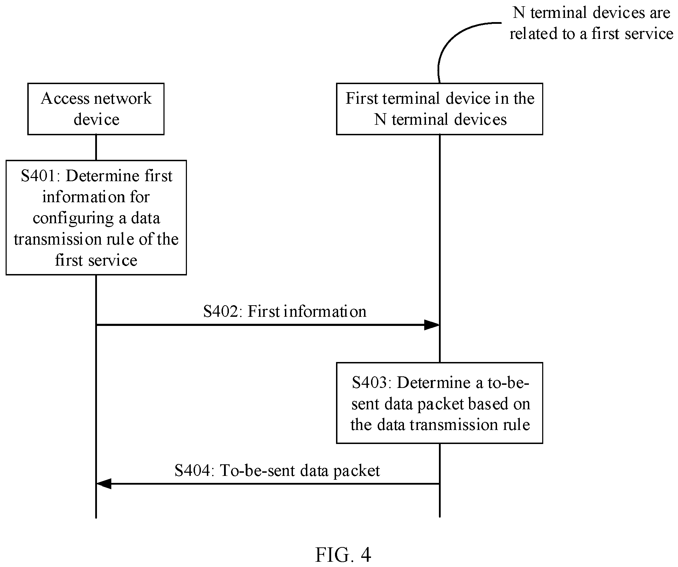

FIG. 4 is a schematic flowchart of a communication method according to this application. The method includes the following steps.

S401: The access network device determines first information.

The first information may be used to configure a data transmission rule of a first service. Further, the first information may further indicate a transmission mode of the first service. The data transmission rule may be understood as a traffic distribution rule, and indicates a plurality of terminal devices how to transmit the first service. A specific data transmission rule, the transmission mode, content of the first information, and a manner for the access network device to determine the first information are described in detail below.

For example, a presentation form of the first service may be, but is not limited to, a PDU session, a quality of service flow (QoS flow), or the like.

The first information may be carried by using higher layer signaling. The higher layer signaling may be a radio resource control (radio resource control, RRC) message such as RRC reconfiguration or a MAC control element (media access control control element, MAC CE). Specifically, the first information may also be in a configuration of a data radio bearer (data radio bearer, DRB).

S402: The access network device sends the first information to at least one of N terminal devices (the following uses a first terminal device in the terminal devices as an example for description), where the N terminal devices are related to the first service, and N is an integer greater than 1. Correspondingly, the first terminal device receives the first information. It should be understood that, that the N terminal devices are related to the first service may be understood as that the N terminal devices participate in transmission of the first service. At the same time, all the N terminal devices may transmit the first service, or only some of the terminal devices may transmit the first service, and other terminal devices may be used as standby devices to transmit the first service when required. Alternatively, that the N terminal devices are related to the first service may be understood as that a first device transmits the first service by using the N terminal devices. The first device is a device that generates data of the first service during uplink transmission, for example, a device (such as a PLC) that controls various types of mechanical or production processes in an industrial scenario, a monitoring device (such as a camera) in an intelligent monitoring scenario, or a detection device in a device defect detection scenario. Specifically, the first device may transmit the first service by using all the N terminal devices, or may transmit the first service by using some of the N terminal devices.

It should be noted that the N terminal devices may access a same access network device, or may access different access network devices. For example, at least two of the N terminal devices access different access network devices. A plurality of terminal devices that access a same access network device may be in a same cell, or may be in different cells. For example, at least two terminal devices are located in different cells.

Optionally, the access network device may determine, in the following manner, that the N terminal devices are related to the first service: A first core network device (for example, an AMF network element) may send configuration information to the access network device, where the configuration information may indicate that the N terminal devices are related to the first service. In an embodiment, the configuration information may further be used to configure a transmission channel that is of the first service and that is between the access network device and the core network device. For example, the configuration information may further include at least one of the following: related information of a transmission channel between an access network and a core network, where the related information may include at least one of the following: a first service-related session ID and a quality of service flow identifier (QoS flow ID, QFI); a tunnel (tunnel) address; and a service group identifier that indicates that a session (for example, a session corresponding to the first service) of the N terminal devices is a group session.

A possible form of the configuration information is that the configuration information sent by the first core network device to the access network device may include configuration information of the N terminal devices, where configuration information of each terminal device may include identification information of the first service.

Another possible form of the configuration information is that the configuration information sent by the first core network device to the access network device may include one piece of configuration information, where the piece of configuration information may carry identification information of the N terminal devices.

S403: The first terminal device determines a to-be-sent data packet based on the data transmission rule, where the to-be-sent data packet is at least one data packet to be sent by the first terminal device in data packets of the first service. The "to-be-sent data packet" may be understood as a set. In a possible implementation, before determining the to-be-sent data packet based on the data transmission rule, the first terminal device may receive M data packets of the first service from an application layer or an upper layer. The data packet received from the application layer or the upper layer may be an industrial Ethernet protocol packet, and specifically, may be one of an Ethernet/IP protocol packet, an industrial Ethernet (PROFINET) packet, a powerlink (POWERLINK) protocol packet, an industrial bus protocol (EtherCAT) packet, and a third-generation serial real-time communication specification (Sercos, serial real-time communication specification) interface (SERCOSIII) protocol packet. M is an integer greater than 0. Therefore, when determining the to-be-sent data packet based on the data transmission rule, the first terminal device may determine a data packet (namely, the to-be-sent data packet) to be sent by the first terminal device in the M data packets.

Optionally, before sending the to-be-sent data packet to the access network device, the first terminal device may number the to-be-sent data packet based on a receiving order of the M data packets or upper-layer sequence numbers carried in the M data packets.

For example, the first terminal device receives a first data packet from the application layer or the upper layer and numbers the data packet as PDCP SN=0 (or SDAP SN, or the like). The first terminal device receives a second data packet from the application layer or the upper layer and numbers the data packet as PDCP SN=1, and so on.

In another example, the first terminal device receives a data packet whose upper-layer sequence number is 0 from the application layer or the upper layer and numbers the data packet as PDCP SN=0 (or SDAP SN, or the like). The first terminal device receives a data packet whose upper-layer sequence number is 1 from the application layer or the upper layer and numbers the data packet as PDCP SN=1. If a data packet whose upper-layer sequence number is 2 is lost, a PDCP SN corresponding to the data packet whose upper-layer sequence number is 2 may be skipped, and the sequence number is incremented by 1. The first terminal device receives a data packet whose upper-layer sequence number is 3 from the application layer or the upper layer and numbers the data packet as PDCP SN=3, and so on.

S404: The first terminal device sends the to-be-sent data packet to the access network device.

Correspondingly, the access network device may organize the received data packet and send the data packet to a second core network device (for example, a UPF network element). An example in which the foregoing at least one terminal device includes the first terminal device and a second terminal device is used. In a specific implementation, after receiving a data packet of the first service from the first terminal device and a data packet of the first service from the second terminal device, the access network device may deduplicate and resort the received data packets, and then send the data packets to the second core network device.

That the access network device deduplicates the received data packets may specifically include: removing a duplicate data packet from the received data packets.

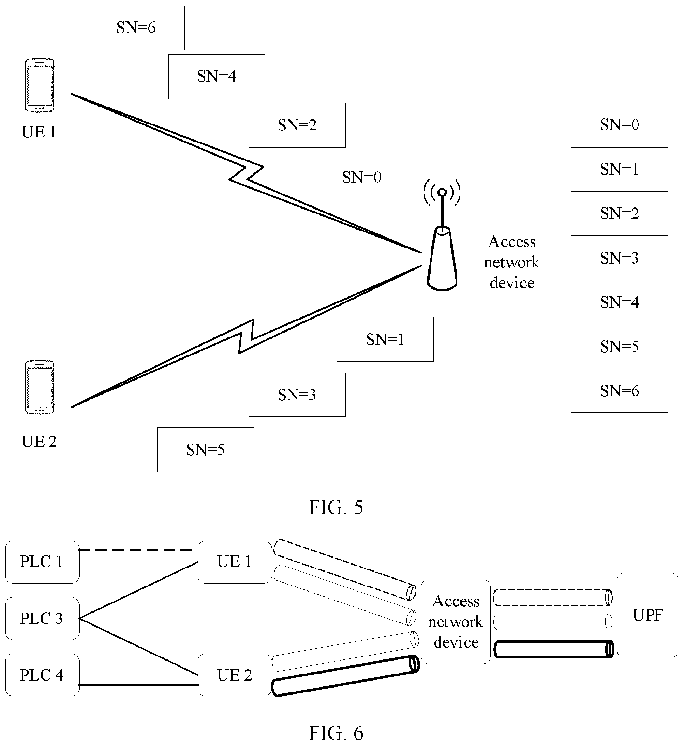

That the access network device resorts the received data packets may specifically include: sorting the received data packets based on the data transmission rule. For example, UE 1 and UE 2 are used as an example. Based on the data transmission rule, the UE 1 sends a data packet whose sequence number is an even number in the data packets of the first service, and the UE 2 sends a data packet whose sequence number is an odd number in the data packets of the first service. The access network device receives data packets whose PDCP sequence numbers (sequence numbers, SNs) are 0, 2, 4, and 6 from the UE 1, and data packets whose PDCP SNs are 1, 3, and 5 from the UE 2. The access network device resorts the data packets from the UE 1 and the data packets from the UE 2. An order of the resorted data packets is: a data packet whose PDCP SN is 0 (from the UE 1), a data packet whose PDCP SN is 1 (from the UE 2), a data packet whose PDCP SN is 2 (from the UE 1), a data packet whose PDCP SN is 3 (from the UE 2), a data packet whose PDCP SN is 4 (from the UE 1), a data packet whose PDCP SN is 5 (from the UE 2), and a data packet whose PDCP SN is 6 (from the UE 1), as shown in FIG. 5.

It should be understood that only the first terminal device is used as an example for description herein, but it does not mean that only the first terminal device in the N terminal devices and the access network device perform the method described in this application, and another terminal device may also perform the method performed by the first terminal device in this embodiment of this application and communicate with the access network device.

In this embodiment of this application, based on control on an access network side, data of the first service may be transmitted on the N terminal devices based on the configured data transmission rule, and the access network device can flexibly configure the data transmission rule, so that a data transmission rule that meets requirements, such as high reliability and a high rate, of the first service may be configured, to improve transmission performance of the first service.

The first information is used to configure the data transmission rule of the first service, and the terminal device determines a to-be-transmitted data packet based on the first information. The following describes several possible examples of the first information. It should be understood that the first information may alternatively be other indication content. This is merely an example for description herein, but does not limit specific content of the first information.

Example 1: The first information includes at least one of a first value m corresponding to the first terminal device and a threshold. The first value and the threshold are used to determine a data packet transmitted by the first terminal device. The first value m is a divisor in a modulo operation and is used to perform the modulo operation on a sequence number of the data packet. Correspondingly, the first terminal device may determine, based on the SN of the data packet, the first value m, and the threshold, whether the data packet needs to be sent, that is, whether the data packet is included in the to-be-sent data packet. Specifically, the first terminal device may determine, based on a comparison between a result of Mod(SN, m) and the threshold, whether to send the data packet. Mod(SN, m) represents a remainder obtained by dividing the SN by M. Further, the first information may further indicate a value relationship between the result of Mod(SN, m) of the to-be-sent data packet and the threshold. For example, if the result of Mod(SN, m) of the to-be-sent data packet is greater than the threshold, the first terminal device needs to send a data packet that meets a condition in which Mod(SN, m) is greater than the threshold. The threshold may include one or more values. Specifically, the threshold may be related to a quantity of terminal devices. For example, for two terminal devices, the threshold may include one value; for three terminal devices, the threshold may include two values; or for N terminal devices, the threshold may include (N-1) values.

In an example for description, two terminal devices, namely, UE 1 and UE 2, are used as an example, and the threshold includes one value n. The first information sent by the access network device to the UE 1 may include the first value m and the threshold n, and indicates that a data packet whose sequence number SN meets a condition in which the result of Mod(SN, m) is greater than n is sent. The first information sent to the UE 2 may include the first value m and the threshold n, and indicates that a data packet whose sequence number SN meets a condition in which the result of Mod(SN, m) is less than or equal to n is sent. Therefore, after receiving the corresponding first information, the UE 1 may determine to send the data packet whose sequence number SN meets the condition in which Mod(SN, m) > n. After receiving the corresponding first information, the UE 2 may determine to send the data packet whose sequence number SN meets the condition in which Mod(SN, m) ≤ n.

In another example for description, three terminal devices, namely, UE 1, UE 2, and UE 3, are used as an example. The threshold includes two values n, namely, n1 and n2, where n1 > n2. The first information sent by the access network device to the UE 1 may include the first value m and the threshold n1, and indicates that a data packet whose sequence number SN meets a condition in which the result of Mod(SN, m) is greater than n1 is sent. The first information sent to the UE 2 may include the first value m and the thresholds n1 and n2, and indicates that a data packet whose sequence number SN meets a condition in which the result of Mod(SN, m) is greater than or equal to n2 and is less than or equal to n1 is sent. The first information sent to the UE 3 may include the first value m and the threshold n2, and indicates that a data packet whose sequence number SN meets a condition in which the result of Mod(SN, m) is less than n2 is sent. Therefore, after receiving the corresponding first information, the UE 1 may determine to send the data packet whose sequence number SN meets the condition in which Mod(SN, m) > n1. After receiving the corresponding first information, the UE 2 may determine to send the data packet whose sequence number SN meets the condition in which n2 ≤ Mod(SN, m) ≤ n1. After receiving the corresponding first information, the UE 3 may determine to send the data packet whose sequence number SN meets the condition in which Mod(SN, m) < n2.

Based on Example 1, in a manner in which the first value m is equal to 1, the threshold is 0, and the data packet that is indicated to be sent meets a condition in which Mod(SN, m) and the threshold are equal, the access network device may indicate the terminal device to send all data of the first service. Further, the access network device sends the first information of the foregoing content to the plurality of terminal devices, to indicate all the plurality of terminal devices to send all data of the first service, so that backup transmission of the first service may be implemented. In a manner in which the first value m is equal to 1, the threshold is 0, and the data packet that is indicated to be sent meets a condition in which Mod(SN, m) and the threshold are unequal, the access network device may indicate the terminal device not to send data of the first service.

In the foregoing Example 1, the first value m (or the threshold n) may be preset, or may be preconfigured by using other signaling (for example, higher layer signaling), or may be protocol-specified.

It should be noted that the SN in this embodiment of this application may be a PDCP SN, an RLC SN, an SDAP sequence number, an upper-layer SN, or another sequence number.

Example 2: The first information may indicate the first terminal device not to send a data packet of the first service, or to send a data packet of the first service.

Further, if the first information indicates the first terminal device to send the data packet of the first service, the access network device may further send a PDCP status report or a first sequence number to the first terminal device, where the PDCP status report indicates a successfully received data packet and/or an unsuccessfully received data packet, and the first sequence number is a sequence number of a 1^{st} data packet to be sent by the first terminal device or a sequence number corresponding to a data packet to be sent by the first terminal device Therefore, the first terminal device may determine a to-be-sent data packet based on the PDCP status report or the first sequence number.

Optionally, the first information may be carried in an RRC message, a MAC CE, or downlink control information (downlink control information, DCI).

Example 3: The first information may indicate the first terminal device to send a data packet whose sequence number is an odd number or an even number.

Example 4: The first information may indicate a traffic distribution proportion of the first terminal device, and the traffic distribution proportion indicates a proportion of a quantity of data packets to be sent by the first terminal device in k data packets (which may be considered as a data packet group) to k. In this case, k may be a quantity of data packets that is set, or may be a quantity of data packets included in a period of time or a transmission window.

In an implementation, the traffic distribution proportion may be a proportion of a quantity of data packets to be sent by the first terminal device in the k data packets to k. For example, the first information indicates that the first terminal device sends 1/2, 1/3, 3/7, 10%, 23%, 40%, or the like of the k data packets. Further, the first information may further include at least one of the following: a location of a data packet and a value of k, where the location of the data packet indicates a location of the data packet to be sent by the first terminal device in the k data packets. If the traffic distribution proportion and the value of k are not integers after calculation, the values may be rounded.

For example, the first information sent by the access network device to the UE 1 may include: k=10 (that is, division is performed in a unit of 10 data packets), the traffic distribution proportion (30%), and the locations of the data packets that are front locations in the 10 data packets (that is, first three data packets of every 10 data packets). The first information sent by the access network device to the UE 2 may include: k=10 (that is, division is performed in a unit of 10 data packets), the traffic distribution proportion is 70%, and the locations of the data packets that are rear locations in the 10 data packets (that is, last seven data packets of every 10 data packets).

It should be noted that the location of the data packet may be preset, or may be preconfigured by the access network device using other signaling (for example, higher layer signaling), or may be protocol-specified.

In another implementation, the traffic distribution proportion may be an interval of the data packet to be sent by the first terminal device and that is in the k data packets relative to the k data packets. For example, the first information indicates first 30% of data packets, data packets in an interval of 30% to 60%, data packets in an interval of 60% to 100%, and the like. It should be noted that proportion division is merely an example for description. Further, the first information may indicate the value of k. If the traffic distribution proportion and the value of k are not integers after calculation, the values may be rounded. For example, the values may be rounded up or rounded down, or may be rounded based on a remainder. For example, a round function is used, where the round function is used to round off a value based on a specified quantity of digits.

For example, the first information sent by the access network device to the UE 1 may include: k=10 (that is, division is performed in a unit of 10 data packets), and the traffic distribution proportion (first 30%). The first information sent by the access network device to the UE 2 may include: k=10 (that is, division is performed in a unit of 10 data packets), and the traffic distribution proportion (30% to 70%). The first information sent by the access network device to the UE 3 may include: k=10 (that is, division is performed in a unit of 10 data packets), and the traffic distribution proportion (70% to 100%). Correspondingly, the UE 1 may send the first three data packets of every 10 data packets, the UE 2 may send the fourth to seventh data packets of every 10 data packets, and the UE 3 may send the last three data packets of every 10 data packets.

It should be noted that the value of k may be preset, or may be preconfigured by the access network device using other signaling (for example, higher layer signaling), or may be protocol-specified. The traffic distribution proportion may be specific to each data packet group, or the traffic distribution proportion may be separately indicated for each data packet group. In a specific implementation, the traffic distribution proportion may be updated.

Optionally, the access network device may dynamically modify the data transmission rule. For example, after sending the first information, the access network device may further update the data transmission rule. Specifically, the access network device may dynamically modify the data transmission rule by using the MAC CE, the RRC message, or the like.

Example 5: The first information may also indicate a range of a sequence number of a data packet to be sent by the first terminal device.

Specifically, the foregoing data transmission rule may be sent to only at least one terminal device (for example, the first terminal device, the second terminal device, or another terminal device in the N terminal devices). After determining a to-be-sent data packet based on the data transmission rule, the at least one terminal device may send a remaining data packet to the another terminal device through an interface between the terminal devices. The data packet transmitted to the another terminal device may be a PDCP data packet, an RLC data packet, a MAC data packet, an SDAP data packet, or the like. The interface between the terminal devices may be wired or wireless. Specifically, indicated by the access network device, the terminal device may determine data packets sent by different terminal devices, and transmit the data packets to another terminal device through the interface between the terminal devices. In this scenario, an application layer architecture is not required to be connected to a plurality of terminals, and only needs to be connected to at least one terminal. A terminal device connected to the application layer offloads data to another terminal device.

In the foregoing manner, the plurality of terminal devices may together complete an uplink transmission task, thereby implementing high-reliability transmission or high uplink rate transmission.

Optionally, in this embodiment of this application, the data transmission rule may be determined based on the transmission mode of the first service, a service requirement of the first service, or air interface quality. The following uses examples to describe the transmission mode of the first service.

The transmission mode of the first service may be a first mode. In the first mode, only some of the N terminal devices need to transmit the first service. Further, the N terminal devices may be classified into two types. One is a primary terminal device, and the other type is a backup terminal device. In other words, the N terminal devices may include at least one primary terminal device and at least one backup terminal device. The primary terminal device may preferentially transmit the first service, and the backup terminal device may be configured to transmit the first service when the primary terminal device is faulty. This mode may also be referred to as a backup mode. A start condition for the backup terminal device to transmit the first service may be that all primary terminal devices are faulty, or may be that a primary terminal device fault exists (where a quantity of faulty primary terminal devices is not limited). Optionally, the backup terminal device, indicated by the access network device, may start to transmit the first service.

An example in which N is equal to 2 is used. The N terminal devices include one primary terminal device and one backup terminal device. The backup terminal device is configured to transmit the first service when the primary terminal device is faulty.

In the foregoing first mode, when the primary terminal device that transmits the first service is faulty, the backup terminal device may continue to transmit the first service, so that reliability of the first service may be ensured. In addition, in the first mode, the backup terminal device starts to transmit the first service when the primary terminal device is faulty. Compared with the backup manner shown in FIG. 2, resources may be saved, and system efficiency is improved. Alternatively, the transmission mode of the first service may be a second mode. In the second mode, all the N terminal devices transmit the first service, and the N terminal devices transmit a same data packet. This mode may also be referred to as a high-reliability mode.

In the second mode, the plurality of terminal devices transmit same data of the first service, so that reliability of the first service may be ensured.

Alternatively, the transmission mode of the first service may be a third mode. In the third mode, all the N terminal devices transmit the first service, and the N terminal devices transmit different data packets. This mode may also be referred to as a high-rate mode.

In the foregoing third mode, the plurality of terminal devices transmit different data of the first service, so that a transmission rate of the first service may be ensured.

Alternatively, the transmission mode of the first service may be a fourth mode. In the fourth mode, all the N terminal devices transmit the first service, and a same data packet and different data packets exist in the data packets transmitted by the first terminal device and data packets transmitted by a second terminal device in the N terminal devices. This mode may also be referred to as a hybrid mode. For example, data packets to be sent and indicated by the data transmission rule for different terminal devices may have a duplicate part. For example, based on the data transmission rule, one terminal device sends first 50% of data packets, and another terminal device sends last 60% of data packets. In this case, 10% of the data packets of the two terminal devices overlap.

In a possible implementation, the transmission mode of the first service may be determined by the access network device. For example, the access network device may determine the transmission mode of the first service based on at least one of the following: quality of a channel between the access network device and at least one of the N terminal devices (namely, air interface quality between the terminal device and the access network device), a working status (for example, whether the terminal device is faulty, whether the terminal device works normally, or a load status) of at least one of the N terminal devices, and a quality of service (quality of service, QoS) requirement of the first service.

For example, the access network device may determine, based on the air interface quality of the terminal device, that the transmission mode is the first mode. Specifically, when the air interface quality of a terminal device is good, only the terminal device may need to transmit the first service. If it is detected that a working status of the terminal device is abnormal (for example, faulty or overloaded), the access network device may indicate another terminal to take over the first service of the terminal device.

In another example, the access network device may determine, based on the air interface quality and the working status of the terminal device, the QoS requirement of the first service, and the like, that the transmission mode is the third mode. Further, the traffic distribution proportion of the first service may be determined based on the air interface quality, a load, and the like of the terminal device. For example, if air interface quality of one terminal device is good, and air interface quality of another terminal device is poor, the access network device may indicate the terminal device with good air interface quality to send more data packets, and the another terminal device to send fewer data packets. A load status is also similar. The access network device may indicate that a terminal device with light load may send more data packets than a terminal device with heavy load. The access network device may determine the quality of the channel between the access network device and the terminal device in the following manner: determining the quality by using channel quality information (channel quality information, CQI) reported by the terminal device, determining the quality by using a measurement report reported by the terminal device, determining the quality by the access network device through uplink measurement, or the like.

The access network device may determine the working status of the terminal device in the following manner: Another terminal device reports, to the access network device, that the terminal device works normally or is faulty, or the terminal device reports the load status and/or an interference status of the terminal device. In a specific implementation, when the UE 1 and the UE 2 are working, if the UE 1 determines that the UE 2 is faulty in sending, the UE 1 sends indication information, for example, the MAC CE or the RRC message, to the access network device to indicate that the UE 2 is faulty. The UE 1 may determine, by using a heartbeat packet between the terminal devices or through another interface between the terminal devices, that the UE 2 is in a faulty state or an abnormal working state.

Alternatively, the access network device may determine the working status of the terminal device in the following manner: The access network device may determine, based on an uplink data transmission status of the terminal device, an acknowledgment (acknowledgment, ACK) feedback status, or a reference signal, that a link of the terminal device or the device is faulty.

In another possible implementation, the transmission mode of the first service may alternatively be indicated by the first core network device. For example, the first core network device sends first indication information to the access network device, where the first indication information indicates the transmission mode corresponding to the first service. For example, the first indication information may be explicit indication information, or may be implicitly determined based on QoS information or session-related information.

In another possible implementation, after determining the transmission mode of the first service, the access network device may send indication information to the terminal device, where the indication information is used to switch a first service mode, for example, switch from the first mode to the second mode.

Optionally, in addition to configuring the data transmission rule by using the first information, the access network device may further configure a DRB of the at least one terminal device. For example, the access network device may send second information to the at least one terminal device, where the second information is used to configure a DRB of the first service. For example, the second information may be carried in an RRC connection reconfiguration message. Correspondingly, the at least one terminal device may configure a data radio bearer of the first service based on the second information.

For example, the DRB configured by using the second information may be a dedicated DRB, and the dedicated DRB may be used for data transmission in one or more transmission modes. Specifically, mode transmission indication information may be included in a field of the DRB configured by using the second information. The mode indication information indicates a transmission mode corresponding to the DRB, or the mode indication information indicates an activated (or enabled) transmission mode. Specifically, the access network device may indicate a transmission mode corresponding to the DRB in either of the following two manners.

Manner 1: The access network device may send an RRC connection reconfiguration message. A DRB configuration (that is, the second information) of the RRC connection reconfiguration message may include information such as a DRB ID and the mode indication information. The DRB ID identifies a corresponding DRB.

Manner 2: The access network device may send an RRC connection reconfiguration message. The RRC connection reconfiguration message includes a DRB configuration (that is, the second information) and a PDCP configuration, an RLC configuration, or a MAC configuration corresponding to the DRB. The PDCP configuration, the RLC configuration, or the MAC configuration corresponding to the DRB may indicate the transmission mode corresponding to the DRB, or indicate the activated (or enabled) transmission mode.

It should be noted that the data transmission rule (namely, the first information) of the first service and the DRB configuration (namely, the second information) may be indicated by using different messages, or may be indicated to the terminal device by using a same message. Further, if the first information and the second information are indicated to the terminal device by using the same message, for example, the DRB configuration (namely the second information) in the RRC connection reconfiguration message includes the first information, the first information may also indicate the transmission mode corresponding to the DRB, that is, the first information may be used as the foregoing mode indication information to indicate the transmission mode corresponding to the DRB.

To facilitate understanding of the solutions provided in embodiments of this application, the following uses an example in which a first core network device is an AMF network element, and a second core network device is a UPF network element to describe a data transmission process of a first service with reference to a scenario shown in FIG. 6. In the scenario shown in FIG. 6, a PLC 1 is connected to UE 1. The UE 1 is responsible for sending and receiving service data related to the PLC 1. A PLC 3 is connected to the UE 1 and UE 2. Uplink service data of the PLC 3 is sent to the UE 1 and the UE 2 by the PLC 3 or by another device, and a downlink service is sent to the PLC 3 by the UE 1 and/or the UE 2. A PLC 2 is connected to the UE 2. The UE 2 is responsible for sending and receiving service data related to the PLC 2. A first service of the PLC 3 is used as an example for description.

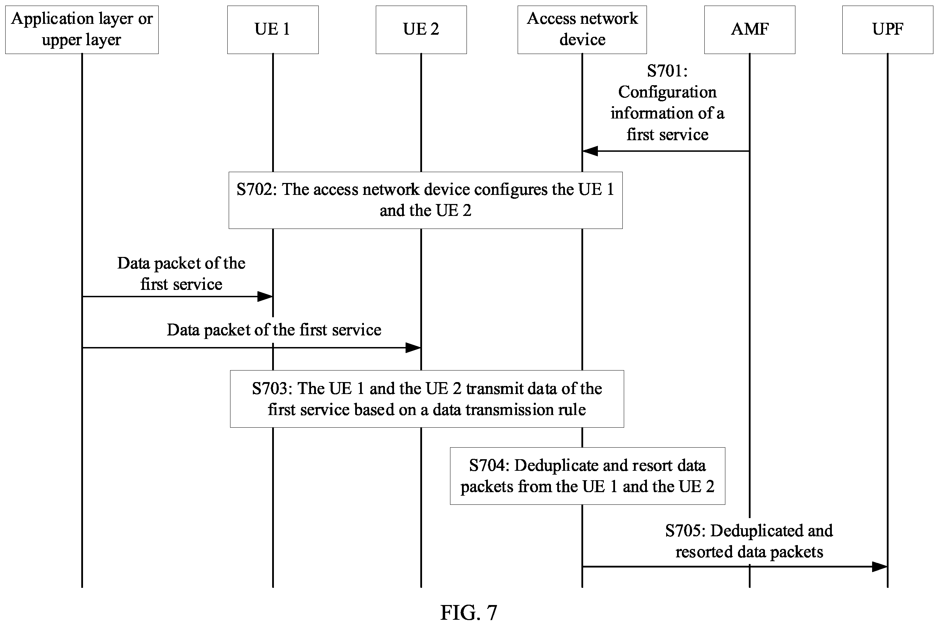

Refer to the example description in FIG. 7. A data transmission process of a first service may include the following steps.

S701: An AMF network element sends configuration information of the first service to an access network device.

The configuration information of the first service is used to configure a transmission channel that is of the first service and that is between an access network and a core network. Specifically, the configuration information of the first service may include at least one of the following: a feature that the UE 1 and the UE 2 are related to the first service; related information of the transmission channel between the access network and the core network, where the related information may include at least one of the following: a first service-related session ID and a QFI; a tunnel address; and a service group identifier that indicates that a session of the UE 1 and the UE 2 is a group session.

In a specific implementation, the AMF sends configuration information of the UE 1 and configuration information of the UE 2 to the access network device, and configuration information of each terminal device may include identification information of the first service.

In another specific implementation, the AMF sends one piece of configuration information to the access network device. The piece of configuration information may carry identification information of the UE 1 and identification information of the UE 2.

It should be noted that step S701 may be an optional step.

S702: The access network device configures the UE 1 and the UE 2.

Specifically, the access network device may configure the UE 1 and the UE 2 based on a binding relationship (or an association relationship or a correlation relationship) between the UE 1 and the first service and between the UE 2 and the first service and a transmission mode of the first service. For the transmission mode of the first service, refer to the foregoing related descriptions.

The transmission mode of the first service may be indicated to the access network device by the AMF network element by using the configuration information of the first service, or may be determined by the access network device. For a specific determining method, refer to the foregoing descriptions. Details are not described herein again.

In an implementation, the access network device may configure a DRB for the UE 1 and the UE 2. For example, the access network device may configure a dedicated DRB for the UE 1 and the UE 2, and the DRB may be used for data transmission in one or more transmission modes.

Optionally, when configuring the UE 1 and the UE 2, the access network device sends an RRC connection reconfiguration message to the UE 1 and the UE 2. A DRB configuration of the RRC connection reconfiguration message may include at least one piece of information such as a DRB ID and mode indication information. The DRB ID identifies a corresponding DRB. The mode indication information indicates a transmission mode corresponding to the DRB, or indicates an activated (or enabled) transmission mode of the DRB. Alternatively, a PDCP configuration, an RLC configuration, or a MAC configuration corresponding to the DRB of the RRC connection reconfiguration message may also indicate the transmission mode corresponding to the DRB, or indicate the activated (or enabled) transmission mode of the DRB.

When configuring the UE 1 and the UE 2, the access network device may further configure a data transmission rule of the UE 1 and the UE 2. For the data transmission rule, refer to the foregoing descriptions. Details are not described herein again.

S703: The UE 1 and the UE 2 transmit data of the first service based on the data transmission rule. Specifically, the UE 1 (or the UE 2) may determine, based on the data transmission rule, a data packet that is in the data packets of the first service and that needs to be sent by the UE 1 (or the UE 2), and send the data packet to the access network device. The data packet of the first service is from an application layer or an upper layer. The data transmission rule in the foregoing Example 3 is used as an example. The UE 1 may send a data packet whose sequence number is an odd number in the data packets of the first service, and the UE 2 may send a data packet whose sequence number is an even number in the data packets of the first service.

S704: The access network device deduplicates and resorts the data packets from the UE 1 and the UE 2.

For a process in which the access network device performs deduplication and resorting, refer to the foregoing descriptions. Details are not described herein again.

S705: The access network device sends the deduplicated and resorted data packets to a UPF.

The following describes, with reference to a protocol stack of the terminal device, an example of a process in which the UE 1 and the UE 2 transmit the first service. In the following example description, a QoS flow 1 represents a service of a PLC 1, a QoS flow 2 represents a service of a PLC 2, and a QoS flow 3 represents a service (for example, the first service) of a PLC 3.

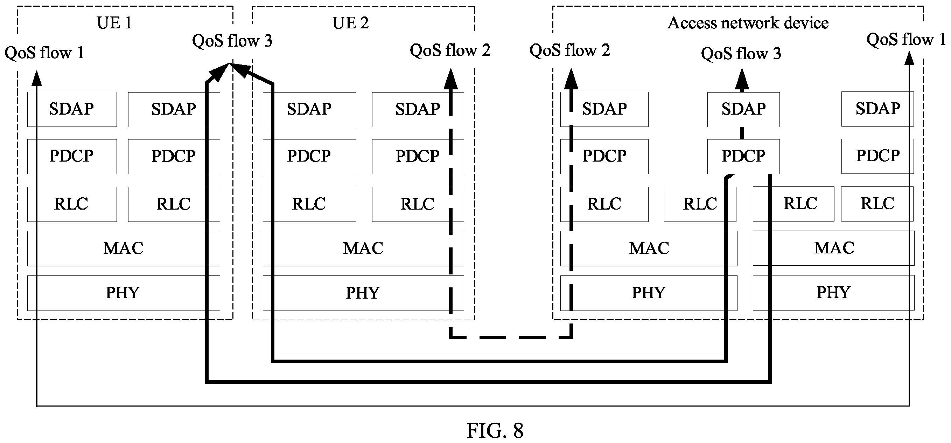

In a first example, the UE 1 and the UE 2 may perform data transmission based on a protocol stack shown in FIG. 8. In a protocol architecture shown in FIG. 8, a PDCP layer on a UE side has a capability of generating a number of a PDCP packet based on an upper-layer sequence number of an upper-layer data packet. A PDCP layer on an access network side has a capability of processing two sets of security parameters (namely, a security parameter of the UE 1 and a security parameter of the UE 2), and thus has a capability of processing PDCP packets from two UEs. The access network device processes the PDCP packets from the two UEs by using one PDCP layer entity.

Uplink transmission is used as an example for description.

A process in which the UE 1 and the UE 2 perform uplink transmission based on the protocol stack shown in FIG. 8 includes: Application layer entities of the UE 1 and the UE 2 receive a data packet of the first service. It should be noted that the UE 1 and the UE 2 receive a same data packet. The UE 1 and the UE 2 perform numbering based on a receiving order of the data packet of the first service or a sequence number carried in the data packet of the first service.

Specifically, the PDCP layer entity of the UE 1 performs PDCP layer numbering on the data packet based on an order of the data packets transmitted in the QoS flow 3 or the sequence number in the data packet. For example, the data packet transmitted in the QoS flow 3 is an industrial Ethernet protocol packet, and may be specifically one of Ethernet/IP, PROFINET, POWERLINK, EtherCAT and SERCOSIII. When a packet loss occurs at an upper layer (for example, an application layer entity), the PDCP layer entity may correspondingly skip a number when performing numbering. For example, if a data packet 2 transmitted in the QoS flow 3 is lost, the PDCP layer entity may skip a PDCP SN corresponding to the data packet 2, and the number is incremented by 1. Similarly, the PDCP layer entity of the UE 2 may also perform PDCP layer numbering in the foregoing manner.

After PDCP layer numbering is performed, the UE 1 and the UE 2 may transmit the first service based on a data transmission rule. For example, the UE 1 and the UE 2 receive the data transmission rule in the foregoing Example 1, a first value m is equal to 3, and a threshold n is equal to 0. The UE 1 sends a data packet whose PDCP SN Mod 3 is equal to 0 (that is, Mod(SN, 3)=0), and the UE 2 sends a data packet whose PDCP SN Mod 3 is not equal to 0 (that is, Mod(SN, 3)≠0).

The UE 1 (or the UE 2) may buffer a data packet that does not need to be sent. Buffer time may be indicated by the access network device to the UE, or may be a default duration, or may be preset. Optionally, if the buffer time expires, a corresponding data packet may be discarded. Alternatively, the UE 1 (or the UE 2) may discard a data packet that does not need to be sent.

Alternatively, the UE 1 (or the UE 2) may buffer only a data packet that needs to be sent, and may discard the data packet that does not need to be sent. Specifically, the buffered data packet may be discarded based on an underlying transmission indication, or may be discarded based on a timer. Alternatively, the access network device may indicate whether the UE 1 (or the UE 2) needs to buffer the data packet that does not need to be sent. For example, the access network device may indicate the UE 1 and the UE 2 to buffer the data packet that does not need to be sent, so that when one of the terminal devices (for example, the UE 1) is faulty, the access network device may indicate another terminal device (for example, the UE 2) to transmit all data packets of the first service. Further, when the UE 1 is faulty, the access network device may send indication information to the UE 2. The indication information includes the PDCP SN, and indicates the UE 2 to transmit all data packets from the SN.

In addition, in this embodiment of this application, based on the foregoing architecture, PDCP enhancement may not be performed (that is, on a terminal device side, PDCP layer numbering is not performed based on the upper-layer sequence number of the upper-layer data packet, and numbering is performed only based on an arrival order of the data packet). By default, SN arrangement at the PDCP layer of each UE is reliable, and a plurality of UEs are consistent in arranging uniform service data packets.

Correspondingly, a process in which the access network device performs uplink processing based on the protocol stack shown in FIG. 8 includes: The access network device establishes one PDCP layer entity for the UE 1 and the UE 2. The PDCP layer entity is configured to perform, based on numbers (SN) carried in the packets, PDCP layer data packet deduplication and resorting on the data packets sent by the UE 1 and the UE 2, and sequentially deliver the data packets to a public tunnel established by the UE 1 and the UE 2 for the QoS flow 3, and transmit the data packets to the UPF. For a process in which the access network device performs deduplication and resorting, refer to the foregoing related descriptions. Details are not described herein again.

Downlink transmission is used as an example for description.

A process in which the access network device performs downlink transmission based on the protocol stack shown in FIG. 8 includes: A PDCP layer entity (that is, the PDCP layer entity established by the access network device for the UE 1 and the UE 2) of the access network device numbers a data packet that is from the UPF and that corresponds to the QoS flow 3, and transmits the data packet to an RLC layer entity 1, or transmits the data packet to the RLC layer entity 2, or transmits the data packet to the RLC layer entity 1 and an RLC layer entity 2. The RLC layer entity 1 is the RLC layer entity that is in the access network device and that corresponds to the QoS flow 3 of the UE 1, and the RLC layer entity 2 is the RLC layer entity that is in the access network device and that corresponds to the QoS flow 3 of the UE 2. During downlink transmission, at the PDCP layer of the access network device, two terminal devices may use a same security parameter, or two terminal devices may use different security parameters.

Specifically, data packet allocation statuses of the RLC layer entity 1 and the RLC layer entity 2 may be determined by the access network device based on channel quality of the UE 1 and the UE 2 (or may refer to another factor, for example, a data transmission rule or a UE status), or may be indicated by the AMF (or the UPF or another core network device).

Further, if the access network device separately sends some data packets to the UE 1 and the UE 2, the access network device may independently number different UEs when performing PDCP layer numbering. In the foregoing manner, the UE 1 and the UE 2 may receive the data packet by using an existing mechanism and deliver the data packet to an application layer, for example, the PLC 3. Alternatively, when performing PDCP layer numbering, the access network device may uniformly number the data packets. In this manner, the UE 1 and the UE 2 need to have a capability of supporting disordered delivery of PDCP layer data packets.

In a specific implementation, the access network device may perform downlink transmission in a multicast manner. To be specific, the UE 1 and the UE 2 are scrambled by using a same G-RNTI, are encrypted by using same security encryption data, and uniformly undergo data numbering. In the foregoing manner, the access network device may send only one piece of data, and the UE 1 and the UE 2 may receive the data on a same resource and deliver the data to the application layer, so that transmission resources are saved.

In the foregoing example, the PDCP layer is enhanced, so that at the PDCP layer on the terminal device side, the sequence number of the data packet may be arranged based on the upper-layer sequence number of the upper-layer data packet. In this way, uniform data sequence number arrangement of data from an application layer to an access layer may be implemented. The PDCP layer on the access network device side supports resorting and deduplication functions, so that only one piece of data is sent between the access network device and the core network device, and there is no duplication, disorder, or the like.

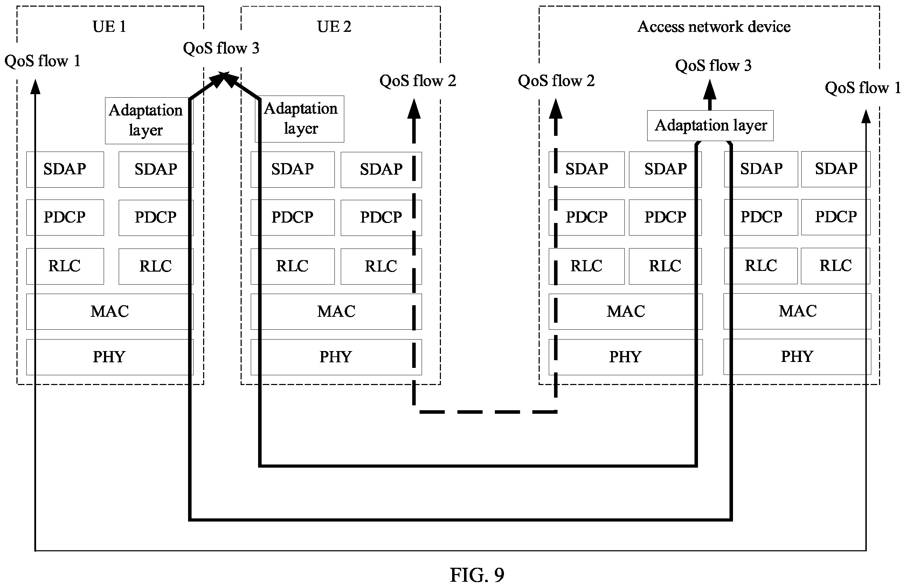

In a second example, the UE 1 and the UE 2 may perform data transmission based on a protocol stack shown in FIG. 9. In a protocol architecture shown in FIG. 9, an adaptation layer may be added on each of a UE side and an access network device side. The adaptation layer may be located in a terminal device, for example, above an SDAP layer. Alternatively, the adaptation layer on the terminal device side may be middleware, for example, a switch, a router, or a hub, located between the terminal device and an industrial device (or a data sending end of a first service). The adaptation layer on the access network device side may be located in an access network device, for example, above the SDAP layer, or may be middleware located between the terminal device and the access network device.

The adaptation layer on the UE side has a capability of performing numbering based on the upper-layer sequence number of the upper-layer data packet. The adaptation layer on the access network side has a capability of processing adaptation layer packets from two UEs. The access network device processes the adaptation layer packets from the two UEs by using one adaptation layer entity.

In the second example, a process in which the UE 1, the UE 2, and the access network device perform uplink/downlink transmission is similar to a process in which the UE 1, the UE 2, and the access network device perform uplink/downlink transmission in the first example. A difference lies in that in the first example, functions such as performing numbering based on the sequence number of the upper-layer data packet are implemented by using the PDCP layer entity; and in the second example, functions such as performing numbering based on the sequence number of the upper-layer data packet are implemented by using the adaptation layer entity. Repeated parts are not described again.

In the foregoing example, a new layer, referred to as the adaptation layer, is introduced between an application layer and an access layer, so that on the terminal device side, the sequence number of the data packet may be arranged based on the upper-layer sequence number of the upper-layer data packet. In this way, uniform data sequence number arrangement of data from the application layer to the access layer may be implemented. The access network device side supports resorting and deduplication functions, so that only one piece of data is sent between the access network device and the core network device, and there is no duplication, disorder, or the like.

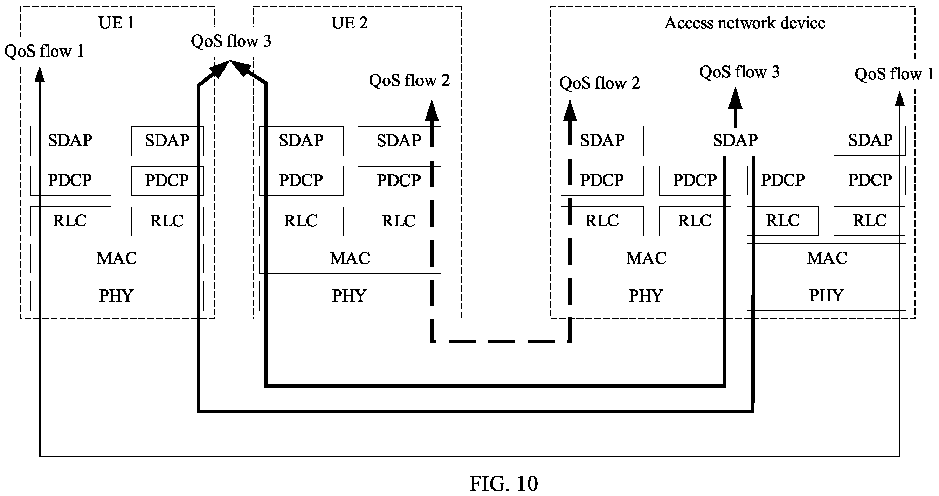

In a third example, the UE 1 and the UE 2 may perform data transmission based on a protocol stack shown in FIG. 10. In a protocol architecture shown in FIG. 10, an SDAP layer on a UE side has a capability of performing numbering based on an upper-layer sequence number of an upper-layer data packet. An SDAP layer on an access network side has a capability of processing SDAP packets from two UEs. The access network device processes the SDAP packets from the two UEs by using one SDAP layer entity.

In the third example, a process in which the UE 1, the UE 2, and the access network device perform uplink/downlink transmission is similar to a process in which the UE 1, the UE 2, and the access network device perform uplink/downlink transmission in the first example. A difference lies in that in the first example, functions such as performing numbering based on the sequence number of the upper-layer data packet are implemented by using the PDCP layer entity; and in the second example, functions such as performing numbering based on the sequence number of the upper-layer data packet are implemented by using the SDAP layer entity. Repeated parts are not described again.

In the foregoing implementation, the SDAP layer is enhanced, so that at the SDAP layer on the terminal device side, the sequence number of the data packet is arranged based on the upper-layer sequence number of the upper-layer data packet. In this way, uniform data sequence number arrangement of data from an application layer to an access layer may be implemented. The SDAP layer on the access network device side supports resorting and deduplication functions, so that only one piece of data is sent between the access network device and the core network device, and there is no duplication, disorder, or the like.

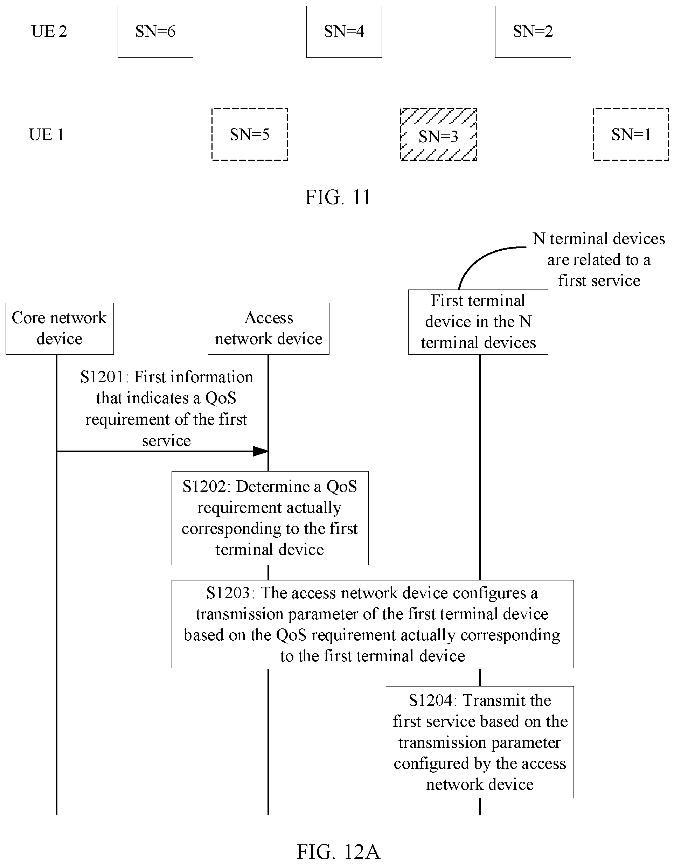

The foregoing describes the data transmission process of the first service with reference to the scenario shown in FIG. 6. However, in data transmission of the first service, a packet loss is inevitable. For example, in an uplink transmission process, a terminal device fails to send a data packet to an access network device. For example, as shown in FIG. 11, UE 1 needs to transmit a data packet whose sequence number is 1/3/5, and UE 2 needs to transmit a data packet whose sequence number is 2/4/6. However, the UE 1 does not transmit the data packet whose sequence number is 3 to the access network device, causing a loss of the data packet whose sequence number is 3. The following uses a packet loss of the UE 1 as an example to describe a method for processing a packet loss in the uplink transmission process and a method for processing a packet loss in a downlink transmission process.

For a case of the packet loss in the uplink transmission process, in a possible implementation, the access network device determines that the UE 1 fails to send a first data packet, and may indicate the UE 2 to send the first data packet. The first data packet is a data packet (for example, the data packet whose sequence number is 3 in FIG. 11) to be sent and determined by the UE 1 based on a data transmission rule.

In an implementation, the access network device indicates, in the following manner, the UE 2 to send the first data packet: sending a sequence number of the first data packet to the UE 2 to indicate the UE to send the first data packet. After receiving the sequence number, the UE 2 sends a data packet corresponding to the sequence number to the access network device. The sequence number of the first data packet may be included in a PDCP packet (for example, PDCP control PDU). Optionally, the access network device may further send an identifier of a DRB. The UE may send a data packet corresponding to the sequence number of the DRB.

In another implementation, the access network device indicates, in the following manner, the UE 2 to send the first data packet: sending a PDCP status report to the UE 2, where the PDCP status report indicates a sequence number of a successfully received data packet and/or a sequence number of an unsuccessfully received data packet. After receiving the PDCP status report, the UE 2 sends a data packet that is not successfully received by the access network device to the access network device.

Optionally, the access network device may determine, in the following manner, that the UE 1 fails to send the first data packet: receiving second indication information from the UE 1, where the second indication information indicates that the first data packet is lost. Specifically, the second indication information may indicate that the UE 1 does not receive or does not successfully send the first data packet. "Not successfully send" may also be understood as that the UE 1 does not receive the first data packet from an application layer, and consequently cannot send the first data packet to the access network device. Optionally, the UE 1 may determine, based on a status of the data packet received from the application layer (for example, based on a sequence number of the data packet), that the first data packet is lost.

Alternatively, the access network device may determine, in the following manner, that the UE 1 fails to send the first data packet: The access network device determines, based on a receiving status of the data packet (for example, based on the sequence number of the data packet), that the first data packet is lost. For example, if the data packets whose sequence numbers are 1 and 3 are received, and the data packet whose sequence number is 2 is not received, it may be determined that the data packet whose sequence number is 2 is lost.

In the foregoing implementation, when a data packet sent by the UE 1 is lost, in addition to a data packet sent by the UE 2, the UE 2 may further send the data packet that is lost by the UE 1, so that reliability of a service is improved.

It should be understood that in this embodiment of this application, traffic distribution transmission for the UE 1 and the UE 2 is merely used as an example for description, and it is not limited that the UE 2 transmits the first data packet of the UE 1. If another UE is related to the first service, the first data packet may alternatively be transmitted by using the another UE. The another UE may transmit all or some data of the first service based on the data transmission rule, or may not transmit the data of the first service at a current time point. This is not specifically limited herein. In addition, an implementation solution in which the access network device indicates the terminal device to send a to-be-sent data packet that is not of the terminal device is not limited to a packet loss scenario, and the foregoing solution may also be implemented in another scenario.

For a case of the packet loss in a downlink transmission process, the UE 1 determines that a downlink data packet is not normally received, and may indicate a sequence number of the data packet to the access network device. The access network device may send the data packet corresponding to the sequence number to the UE 2, or may simultaneously send the data packet to the UE 1.

The data transmission process described above is performed based on the data transmission rule indicated by the access network device by using the first information. In a process of transmitting the first service, the data transmission rule may be changed. For example, in a process of transmitting data between the UE 1 and the access network device and between the UE 2 and the access network device, the access network device may also update the data transmission rule. It should be understood that after the data transmission rule is updated, a data transmission process is similar to the data transmission process before the update, and a difference lies in that different data transmission rules are used. Repeated parts are not described again.

Specifically, when the data transmission rule is updated, only some parameters may be updated, and the other parameters may be maintained unchanged. The access network device may also perform service switching between two UEs. For example, the access network device switches the data packet that is in the data packets of the first service and that needs to be sent by the UE 1 to the UE 2, and the UE 2 sends the data packet that needs to be sent by the UE 1. The access network device may further indicate one of the two UEs to take over a service of the other UE. For example, the access network device may indicate the UE 2 to take over the first service of the UE 1. In other words, in addition to sending the data packet that needs to be sent by the UE 2, the UE 2 further sends the data packet that needs to be sent by the UE 1, and the UE 1 may stop sending the data packet of the first service.

Further, in the foregoing three scenarios (that is, the access network device updates the data transmission rule, switches the first service of the UE 1 to the UE 2, and indicates the UE 2 to take over the first service of the UE 1), the access network device may indicate the UE 1 to report a PDCP data status report. The PDCP data status report may indicate a downlink data packet that is not successfully received by the UE 1 or a downlink data packet that is successfully received by the UE 1. The access network device may start to send the downlink data packet to the UE 2 from a data packet that is not normally received by the UE 1.

During data transmission of the first service, data communication between the terminal device and the access network device is implemented based on resource scheduling performed by the access network device for the terminal device. Uplink transmission is used as an example. The terminal device triggers, based on a BSR reporting mechanism, the access network device to allocate an uplink resource to the terminal device. Currently, the BSR reporting mechanism of the terminal device is as follows: When new data or data with higher priority arrives at a logical channel of the terminal device, BSR reporting is triggered, and the reported BSR reflects a total data amount of the terminal device. However, based on a data transmission method provided in this embodiment of this application, an uplink resource allocated by the access network device based on the BSR reported by the terminal device may not match an amount of data to be reported by the terminal device. For example, after receiving the data packets of the first service, the terminal device sends some of the data packets to the access network device (for example, sends the data packet based on the data transmission rule in the foregoing Example 3), and the access network device allocates the uplink resource to the terminal device based on the data amount reported by the BSR. This may cause a resource waste. On this basis, this embodiment of this application further provides three BSR reporting methods. It should be understood that the BSR reporting method provided in this embodiment of this application may alternatively be implemented independently without depending on the foregoing data transmission process.

The following describes the three BSR reporting methods by using h terminal devices as an example, h is an integer greater than 0, and the h terminal devices are all or some of the foregoing N terminal devices.

Method 1: The h terminal devices buffer all received data packets of the first service, and all or some of the h terminal devices trigger and report the BSR. The BSR indicates an amount of data buffered by the terminal device. The access network device allocates the uplink resource to the h terminal devices based on the received BSR and the data transmission rule. Specifically, the access network device may determine, based on the data transmission rule and the BSR, a quantity of data packets to be sent by each of the h terminal devices, and allocate the uplink resource to each terminal device based on the quantity of data packets to be sent by the terminal device.

Further, a terminal device that is in the h terminal devices and that reports the BSR may be indicated by the access network device. For example, the access network device may indicate one or more of the h terminal devices to report the BSR, and indicate the remaining terminal devices not to report the BSR. A specific indication manner of the access network device is not specifically limited herein. For example, the access network device may indicate, by using third indication information, to send the BSR, and indicate, by using fourth indication information, not to send the BSR. In another example, the access network device may alternatively indicate, by using the third indication information, to send the BSR, and implicitly indicate, in a manner of not sending the third indication information, not to send the BSR. In another example, the access network device may alternatively indicate, by using the fourth indication information, not to send the BSR, and implicitly indicate, in a manner of not sending the fourth indication information, to send the BSR. In a specific implementation, the fourth indication information may indicate that for some specific logical channel groups (the logical channel groups are configured to transmit the first service), if the new data arrives or the data with higher priority arrives, the BSR does not need to be triggered. If the BSR is triggered by a logical channel in another logical channel group, the data amount of the foregoing specific logical channel groups does not need to be reported during reporting. Further, the fourth indication information may further indicate the logical channels or logical channel groups that do not need to trigger the BSR. For example, a corresponding logical channel number or logical channel group number may be carried in the fourth indication information to indicate whether the BSR needs to be triggered.

Optionally, the fourth indication information may be sent by using a MAC CE. Alternatively, the fourth indication information may be sent by using an RRC reconfiguration message. For example, the fourth indication information may be carried in a logical channel configuration or a logical channel group configuration of the RRC reconfiguration message to indicate whether the BSR needs to be triggered, or may be carried in other configuration information.

The third indication information may indicate that the BSR is normally triggered. For a terminal device that normally reports the BSR, a data amount of all data (that is, including a data packet that does not need to be sent by the terminal device) may be reported, or only the amount of the data that needs to be transmitted by the terminal device may be reported. The third indication information may be sent by using the MAC CE or by using an RRC message.

In the foregoing Method 1, because the access network device has delivered the data transmission rule to the terminal device, and the h terminal devices receive a same data packet of the first service, the access network device may infer, based on a BSR reported by any terminal device, a data amount corresponding to the h terminal devices, and then allocate the uplink resource to each terminal device based on the corresponding data amount. In this way, accuracy of resource allocation may be improved, and signaling overheads caused by reporting a BSR a plurality of times can be reduced.

Method 2: The h terminal devices buffer all received data packets of the first service, and the h terminal devices determine, based on the data transmission rule, a quantity of data packets that are in the received data packets of the first service and that need to be sent by the h terminal devices (that is, to-be-sent data packets). The h terminal devices separately report the BSR to the access network device, and the BSR sent by each terminal device indicates the quantity of to-be-sent data packets of the terminal device instead of a total quantity of buffered data packets.

For example, both the UE 1 and the UE 2 receive and buffer data packets whose numbers are 1 to 4 of the first service, and the access network device indicates that the data packets 1 and 3 are sent by the UE 1, and the data packets 2 and 4 are sent by the UE 2. In this case, a data amount of a BSR reported by the UE 1 is a sum of sizes of the data packet 1 and the data packet 3, and a data amount of a BSR reported by the UE 2 is a sum of sizes of the data packet 2 and the data packet 4.

In the foregoing Method 2, the terminal device may determine the data amount of the terminal device based on the data transmission rule, to indicate, when reporting the BSR, the amount of the data that needs to be sent by the terminal device. In other words, when a data amount of a logical channel group is calculated in a BSR assembly process, there is no need to calculate all received data packets of the first service, and only a data amount corresponding to the data packet that needs to be transmitted by the terminal device based on the data transmission rule is calculated, so that the access network device may allocate the uplink resource to the terminal device based on the data amount corresponding to the data packet that needs to be transmitted by the terminal device. In this way, accuracy of resource allocation may be improved, unnecessary reporting is reduced, and a resource waste may be avoided.

Method 3: The h terminal devices determine, based on the data transmission rule, a data packet that is in the received data packets of the first service and that needs to be sent by the terminal devices, and buffer the data packet that needs to be sent by the terminal devices. The h terminal devices separately report the BSR to the access network device, and a BSR sent by one terminal device indicates a quantity of to-be-sent data packets of the terminal device.

For example, both the UE 1 and the UE 2 receive data packets whose numbers are 1 to 4 of the first service, and the access network device indicates that the data packets 1 and 3 are sent by the UE 1, and the data packets 2 and 4 are sent by the UE 2. In this case, the UE 1 buffers the data packets 1 and 3, and reports a BSR to the access network device. A data amount of the reported BSR is a sum of sizes of the data packet 1 and the data packet 3. The UE 2 buffers the data packets 2 and 4, and reports a BSR to the access network device. A data amount of the reported BSR is a sum of sizes of the data packet 2 and the data packet 4.

In the foregoing Method 3, the terminal device may determine a data amount of the terminal device based on the data transmission rule, and buffer only the data packet that needs to be sent by the terminal device, to indicate, when reporting the BSR, an amount of data that needs to be sent by the terminal device. In other words, when a data amount of a logical channel group is calculated in a BSR assembly process, there is no need to calculate all received data packets of the first service, and only the data amount corresponding to the data packet that needs to be transmitted by the terminal device based on the data transmission rule is calculated, so that the access network device may allocate the uplink resource to the terminal device based on the data amount corresponding to the data packet that needs to be transmitted by the terminal device. In this way, the accuracy of resource allocation may be improved, utilization of a storage resource of the terminal device may be improved, and the resource waste can be reduced.

Optionally, in the foregoing Method 1 to Method 3, after the h terminal devices buffer the data packet of the first service, an associated discard timer may be started for each data packet at the PDCP layer. A corresponding data packet is discarded only after the discard timer expires. Before the discard timer expires, the data packet in a buffer can be initially transmitted or retransmitted based on an indication of the network access device.

In a specific implementation, whether the terminal device uses Method 2 or Method 3 to report the BSR may depend on the indication of the access network device. For example, the terminal device may buffer all received data packets by default (that is, Method 2 is used by default). If the access network device indicates that only the data packet that needs to be sent is buffered (that is, indicates Method 3), the terminal device may discard all data packets that do not need to be sent. For example, the access network device may indicate, by using the MAC CE, the terminal device to use Method 2 or Method 3.

In this embodiment of this application, based on the control on an access network side, data of the first service may be transmitted on the N terminal devices based on a configured data transmission rule, and the access network device can flexibly configure the data transmission rule. For example, the access network device may determine the data transmission rule based on a service requirement of the first service, air interface quality of the terminal device, a working status of the terminal device, and the like, so that the N terminal devices may implement a function of backup or traffic distribution based on the service requirement or the air interface quality. In this way, a data transmission rule that meets requirements, such as high reliability and a high rate, of the first service can be configured, to improve transmission performance of the first service.

In addition, the PDCP layer is enhanced, so that at the PDCP layer on the terminal device side, a sequence number of the data packet may be arranged based on an upper-layer sequence number of an upper-layer data packet. Alternatively, a new layer, referred to as an adaptation layer, is introduced between an application layer and an access layer, so that on the terminal device side, the sequence number of the data packet may be arranged based on the upper-layer sequence number of the upper-layer data packet. Alternatively, the SDAP layer is enhanced, so that at the SDAP layer on the terminal device side, the sequence number of the data packet may be arranged based on the upper-layer sequence number of the upper-layer data packet. In this way, uniform data sequence number arrangement of data from the application layer to the access layer may be implemented.

Correspondingly, the PDCP layer on an access network device side supports reordering and deduplication functions, or the adaptation layer on the access network device side may support the reordering and deduplication functions, or the SDAP layer on the access network device side supports the reordering and deduplication functions, so that only one piece of data is sent between the access network device and a core network device, and there is no duplication, disorder, or the like.

In addition, in this embodiment of this application, when a data packet sent by the terminal device is lost, in addition to a data packet sent by another terminal device, the another terminal device may further send the foregoing lost data packet, so that reliability of a service may be improved. In addition, in this embodiment of this application, in the BSR reporting mechanism, the access network device may allocate the uplink resource based on the data amount of the data packet that needs to be sent by the terminal device, to avoid allocating too many or too few transmission resources to the terminal device, so that resource allocation appropriateness may be improved, and resource utilization is improved.

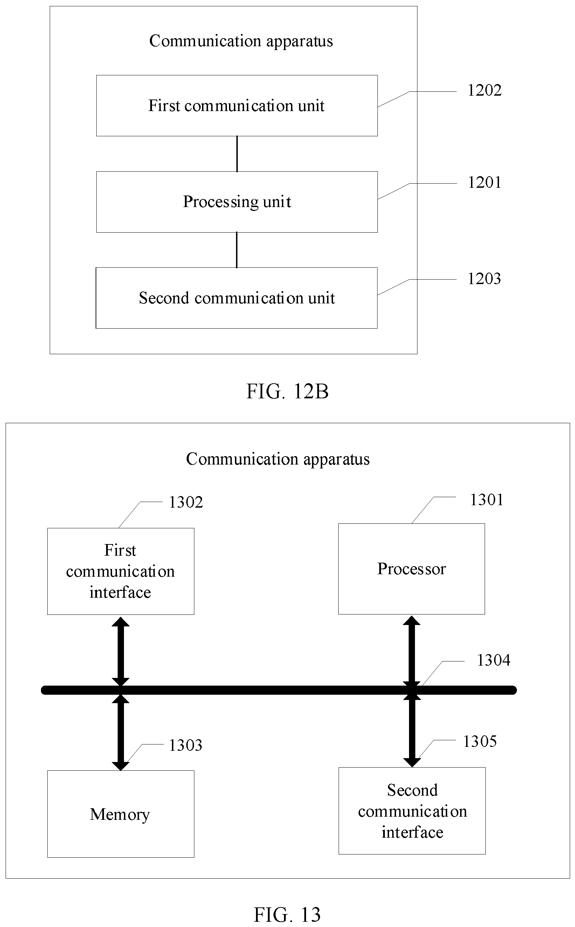

FIG. 12Ais a schematic flowchart of another communication method according to this application. The method includes the following steps.

S1201: A core network device sends first information to an access network device, where the first information indicates a QoS requirement of a first service.

For example, the first information may include but is not limited to: 5G QoS identifier (5G QoS identifier, 5QI) information, an allocation and retention priority (allocation and retention priority, ARP), a guaranteed bit rate (guaranteed bit rate, GBR), and an aggregate maximum bit rate (aggregate maximum bit rate, AMBR). The 5QI information may include at least one of dynamic 5QI information and non-dynamic 5QI information. The dynamic 5QI information may be understood as a 5QI that is non-standardized or that is not pre-configured, including parameters such as a priority, a data packet delay budget, a packet error rate, a 5QI, and a delay criticality. The non-dynamic 5QI information may be understood as a standardized or preconfigured 5QI, including parameters such as a 5QI and a priority. Certainly, the first information may also include other QoS flow information. This is not specifically limited herein.

In an implementation, the access network device and the core network device may receive the first information when establishing a session.

For example, a presentation form of the first service may be, but is not limited to, a PDU session, a QoS flow, or the like.

The first information may be transmitted by using an interface message between the access network device and the core network device, for example, an NGAP message such as a PDU session resource establishment request message, or may be carried by using higher layer signaling. The higher layer signaling may be an RRC message such as RRC reconfiguration, or a MAC CE. Specifically, the first information may also be in a DRB configuration.

S1202: The access network device determines a QoS requirement actually corresponding to at least one of N terminal devices (the following uses a first terminal device as an example for description).

QoS of the first terminal device is lower than a QoS requirement of the first service. For example, a priority (such as the priority or the ARP in 5QI information) of the first terminal device is lower than a priority of the first service, a rate (such as the GBR or the AMBR) of the first terminal device is lower than a rate of the first service, or a parameter in 5QI information of the first terminal device is lower than a parameter in 5QI information of the first service. The N terminal devices are related to the first service, and N is an integer greater than 1. That QoS of the first terminal device is lower than a QoS requirement of the first service may be understood as that a parameter configuration used by the first terminal device during transmission is lower than a parameter configuration corresponding to the QoS requirement of the first service.

It may be understood that because there are N terminal devices related to the first service, QoS of some or all of the N terminal devices can be reduced, so that average QoS of the N terminal devices may be lower than the QoS requirement of the first service. In this way, the N terminal devices may transmit the first service by using few resources, and resource consumption is reduced.

For descriptions of "the N terminal devices are related to the first service", descriptions of "the N terminal devices", and a manner in which the access network device determines that the N terminal devices are related to the first service, refer to related descriptions in S402. Details are not described herein again.

It should be noted that in this embodiment of this application, "QoS of the terminal device" may be understood as QoS of the terminal device for transmitting the first service.

In step S 1202, the access network device may reduce the QoS of the first terminal device, so that a resource used by the first terminal device to transmit the first service can be reduced. In this way, the resource consumption can be reduced.

It should be noted that step S1202 may be an optional step.

S1203: The access network device configures a transmission parameter of the first terminal device based on a QoS requirement actually corresponding to the first terminal device.

For example, the transmission parameter may include: a first MCS configured to transmit the first service, a quantity of time-frequency resources configured to transmit the first service, a quantity of times of repeatedly transmitting the first service, PDCP duplication transmission indication, and the like. The PDCP duplication transmission indication indicates whether to enable PDCP duplication transmission when the first service is transmitted. PDCP duplication transmission may be understood as transmitting one PDCP packet to two RLC entities, and the two RLC entities independently process the received PDCP packet and transmit the PDCP packet to a MAC layer. The transmission parameter may meet at least one of the following items.

The first MCS may be higher than a second MCS. The first MCS is an MCS used by the first terminal device to transmit the first service. The second MCS may meet the QoS requirement of the first service. It may be understood that a lower MCS indicates that more resources are needed for transmission. In the foregoing manner, a higher MCS is configured for the first terminal device, so that resource consumption can be reduced, and resource utilization is improved.

The quantity of time-frequency resources used by the first terminal device to transmit the first service may be less than a first value, and time-frequency resources whose quantity is the first value meets the QoS requirement of the first service. It may be understood that a higher data transmission rate indicates that more resources are needed for transmission. In the foregoing manner, fewer time-frequency resources are configured for the first terminal device, so that the resource consumption can be reduced, and the resource utilization is improved.

A value of the quantity of times the first terminal device repeatedly transmit the first service may be less than a second value. The quantity of repeated transmissions whose value is the second value may meet the QoS requirement of the first service. It may be understood that a larger quantity of repeated transmissions indicates that more resources are required for transmission. In the foregoing manner, a smaller quantity of repeated transmissions is configured for the first terminal device, so that the resource consumption can be reduced, and the resource utilization is improved. The PDCP duplicated transmission indication indicates that PDCP duplicated transmission is not used. In the foregoing manner, a plurality of pieces of data do not need to be simultaneously transmitted, so that resource consumption can be reduced.

S1204: The first terminal device transmits the first service based on the transmission parameter configured by the access network device.

Compared with the transmission manner shown in FIG. 2 in which the N terminal devices consumes N times air interface resources, transmission resources, processing resources of a station, power resources of UE, and the like to transmit the first service, in this application, QoS of the first terminal device is reduced, so that consumption of a resource (such as the air interface resource) used by the first terminal device to transmit the first service can be reduced. In this way, a quantity of resources to be consumed by the N terminal devices to transmit the first service are reduced. In addition, in this application, a plurality of terminal devices transmit the first service, so that a hierarchical gain may be obtained. In this way, reliability of the first service is implemented.

In a possible implementation, if the first terminal device successfully sends a first data packet of the first service, another terminal device may not retransmit the first data packet when failing to transmit the first data packet. In an implementation, the access network device receives the first data packet from the first terminal device. If a second terminal device fails to send the first data packet, the access network device may send indication information to the second terminal device. The indication information may indicate the second terminal device not to retransmit the first data packet. In another implementation, the access network device receives the first data packet from the first terminal device. If the second terminal device fails to send the first data packet, the state of the first data packet in the PDCP status report sent by the access network device to the second terminal device may be that the first data packet is successfully sent. In the foregoing manner, resource consumption may further be reduced. In another implementation, the access network device receives the first data packet from the first terminal device. If the second terminal device fails to send the first data packet, the access network device may send an ACK indication or may not send retransmission indication to the second terminal device, so that the second terminal device does not retransmit the first data packet, and the resource consumption is reduced.

After receiving the data packets of the N terminal devices, the access network device may send the data packet to the core network device. Specifically, the access network device may deduplicate and resort the data packets from the N terminal devices, and then send the data packets to the core network device. In the foregoing manner, only one piece of data is sent between the access network device and the core network device, and there is no repetition, disorder, or the like.

Alternatively, the access network device may separately and independently send the data packets from the N terminal devices to the core network device. Further, the core network device may deduplicate and resort the data packets from the N terminal devices, and then send deduplicated and resorted data packets to a server. In the foregoing manner, only one piece of data is sent between the core network device and the server, and there is no repetition, disorder, or the like. Alternatively, the core network device may separately and independently send the data packets from the N terminal devices to the server. After receiving the data packets from the N terminal devices, the server performs deduplication and resorting.

For a process of deduplication and resorting in this application (for example, a process of performing deduplication and resorting by the access network device, a process of performing deduplication and resorting by the core network device, and a process of performing deduplication and resorting by the server), refer to the process of performing deduplication and resorting in step S404. Details are not described herein again.

The foregoing uses the first terminal device as an example to describe a manner in which the N terminal devices transmit the first service. In a process in which the N terminal devices transmit the first service in the foregoing manner, working statuses of some terminal devices may be abnormal (for example, the terminal device is faulty or overloaded). For this case, this application provides a possible solution. The following uses an example in which the first terminal device works abnormally for description.

When determining that the first terminal device works abnormally, the access network device may improve QoS of at least one terminal device that does not work abnormally. In a specific implementation, if a quantity of terminal devices that work normally is greater than 1, QoS of the terminal devices that work normally may be maintained unchanged, or QoS of all or some of the terminal devices that work normally is improved, and after improvement, average QoS of the terminal devices that work normally is still lower than the QoS requirement of the first service. If the quantity of terminal devices that work normally is equal to 1, QoS of the terminal device may be improved, so that the QoS of the terminal device meets the QoS requirement of the first service. The access network device may determine the working status of the terminal device in the following manner: Another terminal device reports, to the access network device, that the terminal device works normally or is faulty, or the terminal device reports a load status and/or an interference status of the terminal device. The another terminal device may determine, by using a heartbeat packet between the terminal devices or through another interface between the terminal devices, that the terminal device is in a faulty state or an abnormal working state.

Alternatively, the access network device may determine the working status of the terminal device in the following manner: The access network device may determine, based on an uplink data transmission status of the terminal device, a reference signal transmission status, an ACK feedback status, or a reference signal, that a link of the terminal device or the device is faulty.

In an implementation, the access network device may improve the QoS of the terminal device in at least one of the following four manners.

Manner 1: The access network device reduces the MCS used by the terminal device to transmit the first service.

Manner 2: The access network device increases the time-frequency resource used by the terminal device to transmit the first service.

Manner 3: The access network device increases the quantity of times the terminal device repeatedly transmits the first service.

Manner 4: The access network device configures the terminal device to transmit the first service in a PDCP replication manner.

In the communication method in FIG. 12A, for parameter definitions and steps related to the methods in FIG. 4 to FIG. 11, refer to related descriptions in FIG. 4 to FIG. 11. Repeated parts are not described again.

In this application, the QoS of the N terminal devices is reduced, so that resources consumed when the N terminal devices transmit the first service are less than N times the resources consumed by one terminal device for the first service. In this way, resource consumption can be reduced. In addition, when a terminal device fault occurs, QoS of remaining terminal devices is improved, so that reliability of the first service may be ensured to some extent.

Based on a same technical concept as the method embodiments, an embodiment of this application provides a communication apparatus. A structure of the communication apparatus may be shown in FIG. 12B. The communication apparatus includes a processing unit 1201 and a first communication unit 1202. The apparatus may further include a second communication unit 1203. It may be understood that, in this implementation, the first communication unit and the second communication unit may be a same communication unit, or may be different communication units. In a possible implementation, the communication apparatus may be specifically configured to implement the method performed by an access network device in the embodiment in FIG. 4. The apparatus may be the access network device, or may be a chip or a chip set in the access network device or a part that is of a chip in the access network device, or a part that is of the chip and that is configured to perform a function of a related method. The processing unit 1201 is configured to determine first information, where the first information is used to configure a data transmission rule of a first service. The first communication unit 1202 is configured to send the first information to a first terminal device in N terminal devices, where the N terminal devices are related to the first service, and N is an integer greater than 1.

Optionally, the second communication unit 1203 is configured to receive configuration information from a first core network device, and the configuration information indicates that the N terminal devices are related to the first service.

The processing unit 1201 may further be configured to determine a transmission mode of the first service based on at least one of the following: quality of a channel between the processing unit and at least one of the N terminal devices, a working status of the at least one of the N terminal devices, and a QoS requirement of the first service.

Alternatively, the processing unit 1201 may further be configured to determine the transmission mode of the first service based on first indication information received by the second communication unit 1203, where the first indication information indicates the transmission mode corresponding to the first service.

The first communication unit 1202 may further be configured to receive a data packet of the first service, where the data packet is from at least one of the N terminal devices. The processing unit 1201 is further configured to deduplicate and resort the received data packet. The second communication unit 1203 is further configured to send a deduplicated and resorted data packet to a second core network device.

Optionally, the processing unit 1201 may further be configured to: determine that the first terminal device fails to send a first data packet, and indicate a second terminal device in the N terminal devices to send the first data packet.

Specifically, the processing unit 1201 may be configured to determine, based on second indication information received by the first communication unit 1202, that the first terminal device fails to send the first data packet, where the second indication information indicates that the first terminal device does not receive or does not successfully send the first data packet.

In an implementation, the first communication unit 1202 is further configured to receive a BSR from the first terminal device, where the BSR indicates an amount of data buffered by the first terminal device. The processing unit 1201 is further configured to: determine, based on the data transmission rule and the BSR, a quantity of data packets to be sent by the first terminal device, and allocate an uplink resource to the first terminal device based on the quantity of data packets to be sent by the first terminal device.

Optionally, the first communication unit 1202 is further configured to send third indication information to the first terminal device, where the third indication information indicates sending of the BSR.

The first communication unit 1202 may further be configured to send fourth indication information to at least one of the remaining terminal devices, where the fourth indication information indicates not to send the BSR, and the remaining terminal devices are terminal devices in the N terminal devices other than the first terminal device.

In addition, the first communication unit 1202 may further be configured to send second information to the first terminal device, where the second information is used to configure a data radio bearer of the first service.

In another possible implementation, the communication apparatus may be specifically configured to implement the method performed by the first terminal device in the embodiment in FIG. 4. The apparatus may be the first terminal device, or may be a chip or a chip set in the first terminal device, or a part that is of the chip and that is configured to perform a function of a related method. The first communication unit 1202 is configured to receive the first information from the access network device, where the first information is used to configure the data transmission rule of the first service, the first service is related to the N terminal devices, N is an integer greater than 1, and the N terminal devices include the first terminal device. The processing unit 1201 is configured to determine a to-be-sent data packet of the first service based on the data transmission rule, where the to-be-sent data packet is at least one data packet to be sent by the first terminal device. The first communication unit 1202 is further configured to send the to-be-sent data packet to the access network device.

Optionally, the second communication unit 1203 is configured to: before the processing unit 1201 determines the to-be-sent data packet of the first service based on the data transmission rule, receive M data packets of the first service, where M is an integer greater than 0, and the to-be-sent data packet is determined based on the M data packets.

The processing unit 1201 is further configured to number the to-be-sent data packet based on a receiving order of the M data packets or sequence numbers carried in the M data packets.

Optionally, the first communication unit 1202 is further configured to receive indication information from the access network device, where the indication information indicates sending of a second data packet, and the second data packet does not belong to the to-be-sent data packet. In an implementation, the processing unit 1201 is further configured to: before the first communication unit 1202 sends the to-be-sent data packet to the access network device, buffer the M data packets; and determine a quantity of to-be-sent data packets based on second configuration information and M. The first communication unit 1202 is further configured to send a first BSR to the access network device, where the first BSR indicates a quantity of to-be-sent data packets.

In another implementation, the processing unit 1201 is further configured to: before the first communication unit 1202 sends the to-be-sent data packet to the access network device, buffer the to-be-sent data packet. The first communication unit 1202 is further configured to send a second BSR to the access network device, where the second BSR indicates a quantity of buffered data packets.

In another implementation, the first communication unit 1202 is further configured to: before the to-be-sent data packet is sent to the access network device, receive the third indication information from the access network device, where the third indication information indicates sending of the BSR. The processing unit 1201 is further configured to buffer the M data packet. The first communication unit 1202 is further configured to send a third BSR to the access network device, where the third BSR indicates an amount of data buffered by the first terminal device.

Optionally, the first communication unit 1202 is further configured to receive the fourth indication information from the access network device, where the fourth indication information indicates not to send the BSR.

Optionally, the first communication unit 1202 is further configured to receive the second information from the access network device, where the second information is used to configure the data radio bearer of the first service. The processing unit 1201 is further configured to configure the data radio bearer of the first service based on the second information.

In another possible implementation, the communication apparatus may be specifically configured to implement the method performed by the access network device in the embodiment in FIG. 12A. The apparatus may be the access network device, or may be a chip or a chip set in the access network device, or a part that is of the chip and that is configured to perform a function of a related method. The first communication unit 1202 is configured to receive the first information, where the first information indicates a QoS requirement of the first service. The processing unit 1201 is configured to determine a QoS requirement actually corresponding to the first terminal device in the N terminal devices. QoS of the first terminal device is lower than the QoS requirement of the first service. N terminal devices are related to the first service, and N is an integer greater than 1. For example, the first information includes at least one of the following: 5QI information, an ARP, a GBR, and an AMBR.

Optionally, the processing unit 1201 is further configured to: when a transmission parameter is configured based on QoS actually corresponding to the first terminal device, increase an MCS used by the first terminal device to transmit the first service.

Optionally, the processing unit 1201 is further configured to: when the transmission parameter is configured based on the QoS actually corresponding to the first terminal device, reduce a time-frequency resource used by the first terminal device to transmit the first service.

Optionally, the processing unit 1201 is further configured to: when the transmission parameter is configured based on the QoS actually corresponding to the first terminal device, reduce a quantity of times the first terminal device repeatedly transmit the first service.

Optionally, the second communication unit 1203 is configured to receive the first data packet from the first terminal device. If the second terminal device fails to send the first data packet, indication information may be sent to the second terminal device, where the indication information indicates the second terminal device not to retransmit the first data packet.

For example, the indication information may be an ACK indication or an indication of not sending a retransmission, or the indication information may be a PDCP status report, and a state of the first data packet in the PDCP status report is that the first data packet is successfully sent.

Optionally, the processing unit 1201 is further configured to deduplicate and resort data packets from the N terminal devices. The first communication unit 1202 is further configured to send a data report obtained after deduplication and resorting to a core network device.

Optionally, the processing unit 1201 is further configured to: when determining that the first terminal device works abnormally, improve QoS of at least one terminal device that works normally in the N terminal devices.

Optionally, the processing unit 1201 is further configured to: if a quantity of terminal devices that work normally in the N terminal devices is greater than 1, maintain QoS of the terminal devices that work normally unchanged, or improve QoS of all or some of the terminal devices that work normally, where after improvement, average QoS of the terminal devices that work normally is lower than the QoS requirement of the first service.

Optionally, the processing unit 1201 is further configured to: if the quantity of terminal devices that work normally in the N terminal devices is equal to 1, improve QoS of the terminal device, so that the QoS of the terminal device meets the QoS requirement of the first service.

Optionally, when improving the QoS of the terminal device, the processing unit 1201 is specifically configured to reduce the MCS used by the terminal device to transmit the first service. Optionally, when improving the QoS of the terminal device, the processing unit 1201 is specifically configured to increase the time-frequency resource used by the terminal device to transmit the first service.

Optionally, when improving the QoS of the terminal device, the processing unit 1201 is specifically configured to increase the quantity of times the terminal device repeatedly transmits the first service.

Division into the modules in embodiments of this application is an example, is merely logical function division. In actual implementation, another division manner may be used. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related descriptions in the method embodiments.

In a possible manner, the communication apparatus may be shown in FIG. 13. The apparatus may be a communication device or a chip in the communication device. The communication device may be the first terminal device in the foregoing embodiment, or may be the access network device in the foregoing embodiment. The apparatus includes a processor 1301 and a first communication interface 1302, and may further include a second communication interface 1305 and a memory 1303. The processing unit 1201 may be the processor 1301. The first communication unit 1202 may be the first communication interface 1302. The second communication unit 1203 may be the second communication interface 1305.

The processor 1301 may be a CPU, a digital processing unit, or the like. The first communication interface 1302 and the second communication interface 1305 may be a transceiver, or may be an interface circuit such as a transceiver circuit, or may be a transceiver chip. The apparatus further includes a memory 1303, configured to store a program executed by the processor 1301. The memory 1303 may be a nonvolatile memory such as a hard disk drive (hard disk drive, HDD) or a solid-state drive (solid-state drive, SSD), or may be a volatile memory (volatile memory) such as a random-access memory (random-access memory, RAM). The memory 1303 is any other medium that can carry or store expected program code in a form of an instruction structure or a data structure and that can be accessed by a computer, but is not limited thereto.

The processor 1301 is configured to execute the program code stored in the memory 1303, and is specifically configured to perform an action of the processing unit 1201. Details are not described herein again in this application. The first communication interface 1302 is specifically configured to perform an action of the first communication unit 1202. Details are not described herein again in this application. The second communication interface 1305 is specifically configured to perform an action of the second communication unit 1203. Details are not described herein again in this application.

A specific connection medium between the first communication interface 1302, the second communication interface 1305, the processor 1301, and the memory 1303 is not limited in this embodiment of this application. In this embodiment of this application, the memory 1303, the processor 1301, and the first communication interface 1302 are connected to each other through a bus 1304 in FIG. 13. The bus is represented by using a bold line in FIG. 13. A connection manner between other components is merely an example for description, and is not limited thereto. The bus may be classified into an address bus, a data bus, a control bus, and the like. For ease of representation, only one bold line is used to represent the bus in FIG. 13, but it does not mean that there is only one bus or only one type of bus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a function specified in one or more processes in the flowcharts and/or in one or more blocks in the block diagrams.

These computer program instructions may alternatively be stored in a computer-readable memory that can instruct the computer or the another programmable data processing device to work in a specific manner, so that instructions stored in the computer-readable memory generate an artifact that includes an instruction apparatus. The instruction apparatus implements a function specified in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a function specified in one or more processes in the flowcharts and/or in one or more blocks in the block diagrams.

It is clear that a person skilled in the art may make various modifications and variations to this application without departing from the spirit and scope of this application. In this way, this application is intended to cover these modifications and variations of this application provided that they fall within the scope of protection defined by the claims of this application and their equivalent technologies.

## Claims

1. A communication method, wherein the method comprises:
determining first information, wherein the first information is used to configure a data transmission rule of a first service; and
sending the first information to a first terminal device in N terminal devices, wherein the N terminal devices are related to the first service, and N is an integer greater than 1.

2. The method according to claim 1, wherein the method further comprises:
receiving configuration information from a first core network device, wherein the configuration information indicates that the N terminal devices are related to the first service.

3. The method according to claim 1 or 2, wherein the data transmission rule is determined based on a transmission mode of the first service.

4. The method according to claim 3, wherein the method further comprises:
determining the transmission mode of the first service based on at least one of the following: quality of a channel between an access network device and at least one of the N terminal devices, a working status of at least one of the N terminal devices, or a quality of service QoS requirement of the first service; or
determining the transmission mode of the first service based on first indication information from the first core network device, wherein the first indication information indicates the transmission mode corresponding to the first service.

5. The method according to claim 3 or 4, wherein the transmission mode is one of the following four modes:
a first mode, wherein in the first mode, the N terminal devices comprise at least one primary terminal device and at least one backup terminal device, and the backup terminal device is configured to transmit the first service when all or some of the at least one primary terminal device is faulty;
a second mode, wherein in the second mode, all the N terminal devices transmit the first service, and the N terminal devices transmit a same data packet;
a third mode, wherein in the third mode, all the N terminal devices transmit the first service, and the N terminal devices transmit different data packets; and
a fourth mode, wherein in the fourth mode, all the N terminal devices transmit the first service, and a same data packet and different data packets exist in data packets transmitted by the first terminal device and data packets transmitted by a second terminal device in the N terminal devices.

6. The method according to claim 5, wherein the first information comprises at least one of a first value corresponding to the first terminal device and a threshold, and the first value and the threshold are used to determine a data packet transmitted by the first terminal device;
the first information indicates whether the first terminal device sends a data packet of the first service;
the first information indicates the first terminal device to send a data packet whose sequence number is an odd number or an even number;
the first information indicates a traffic distribution proportion of the first terminal device, and the traffic distribution proportion is a proportion of a quantity of data packets to be sent by the first terminal device in k data packets to k; or
the first information indicates a range of a sequence number of a data packet to be sent by the first terminal device.

7. The method according to claim 5, wherein the method further comprises:
sending a packet data convergence protocol PDCP status report or a first sequence number to the first terminal device, wherein the PDCP status report indicates a successfully received data packet and/or an unsuccessfully received data packet, and the first sequence number is a sequence number of a 1^{st} data packet to be sent by the first terminal device or a sequence number corresponding to a data packet to be sent by the first terminal device.

8. The method according to claim 5, wherein the first information further comprises at least one of the following: a location of a data packet and a value of k, and the location of the data packet indicates a location of the data packet to be sent by the first terminal device in k data packets.

9. The method according to any one of claims 1 to 8, wherein the method further comprises:
receiving the data packet of the first service, wherein the data packet is from at least one of the N terminal devices;
deduplicating and resorting the received data packet; and
sending a deduplicated and resorted data packet to a second core network device.

10. The method according to any one of claims 1 to 9, wherein the method further comprises:
receiving a buffer status report BSR from the first terminal device, wherein the BSR indicates an amount of data buffered by the first terminal device;
determining, based on the data transmission rule and the BSR, a quantity of data packets to be sent by the first terminal device; and
allocating an uplink resource to the first terminal device based on the quantity of data packets to be sent by the first terminal device.

11. A communication method, wherein the method is applicable to a first terminal device or a chip of the first terminal device, and the method comprises:
receiving first information from an access network device, wherein the first information is used to configure a data transmission rule of a first service, the first service is related to N terminal devices, N is an integer greater than 1, and the N terminal devices comprise the first terminal device;
determining a to-be-sent data packet of the first service based on the data transmission rule, wherein the to-be-sent data packet is at least one data packet to be sent by the first terminal device; and
sending the to-be-sent data packet to the access network device.

12. The method according to claim 11, wherein the data transmission rule is determined based on a transmission mode of the first service.

13. The method according to claim 12, wherein the transmission mode is one of the following four modes:
a first mode, wherein in the first mode, the N terminal devices comprise at least one primary terminal device and at least one backup terminal device, and the backup terminal device is configured to transmit the first service when all or some of the at least one primary terminal device is faulty;
a second mode, wherein in the second mode, all the N terminal devices transmit the first service, and the N terminal devices transmit a same data packet;
a third mode, wherein in the third mode, all the N terminal devices transmit the first service, and the N terminal devices transmit different data packets; and
a fourth mode, wherein in the fourth mode, all the N terminal devices transmit the first service, and a same data packet and different data packets exist in data packets transmitted by the first terminal device and data packets transmitted by a second terminal device in the N terminal devices.

14. The method according to any one of claims 11 to 13, wherein the first information comprises at least one of a first value corresponding to the first terminal device and a threshold, and the first value and the threshold are used to determine a data packet transmitted by the first terminal device;
the first information indicates whether the first terminal device sends a data packet of the first service;
the first information indicates the first terminal device to send a data packet whose sequence number is an odd number or an even number;
the first information indicates a traffic distribution proportion of the first terminal device, and the traffic distribution proportion is a proportion of a quantity of data packets to be sent by the first terminal device in k data packets to k; or
the first information indicates a range of a sequence number of a data packet to be sent by the first terminal device.

15. The method according to claim 14, wherein the method further comprises:
receiving a packet data convergence protocol PDCP status report or a first sequence number from the access network device, wherein the PDCP status report indicates a successfully sent data packet and/or an unsuccessfully sent data packet, and the first sequence number is a sequence number of a 1^{st} data packet to be sent by the first terminal device or a sequence number corresponding to the data packet to be sent by the first terminal device; and
the determining a to-be-sent data packet of the first service based on the data transmission rule comprises:
determining the to-be-sent data packet based on the PDCP status report or the first sequence number.

16. The method according to claim 14, wherein the first information further comprises at least one of the following: a location of a data packet and a value of k, and the location of the data packet indicates a location of the data packet to be sent by the first terminal device in the k data packets.

17. The method according to any one of claims 11 to 16, wherein before the determining a to-be-sent data packet of the first service based on the data transmission rule, the method further comprises:
receiving M data packets of the first service, wherein M is an integer greater than 0, and the to-be-sent data packet is determined based on the M data packets.

18. The method according to claim 17, wherein before the sending the to-be-sent data packet to the access network device, the method further comprises:
numbering the to-be-sent data packet based on a receiving order of the M data packets or sequence numbers carried in the M data packets.

19. The method according to claim 17 or 18, wherein before the sending the to-be-sent data packet to the access network device, the method further comprises:
buffering the M data packets;
determining the to-be-sent data packet based on second configuration information and M; and
sending a first buffer status report BSR to the access network device, wherein the first BSR indicates a quantity of to-be-sent data packets.

20. The method according to any one of claims 17 to 19, wherein before the sending the to-be-sent data packet to the access network device, the method further comprises:
buffering the to-be-sent data packet; and
sending a second buffer status report BSR to the access network device, wherein the second BSR indicates a quantity of buffered data packets.

21. A communication method, wherein the method comprises:
receiving first information, wherein the first information indicates a quality of service QoS requirement of a first service; and
determining QoS actually corresponding to a first terminal device in N terminal devices, wherein the QoS of the first terminal device is lower than the QoS requirement of the first service, the N terminal devices are related to the first service, and N is an integer greater than 1.

22. The method according to claim 21, wherein the first information comprises at least one of the following: 5G QoS identifier information, an allocation and retention priority, a guaranteed bit rate, and an aggregate maximum bit rate.

23. The method according to claim 21 or 22, wherein the method further comprises:
when a transmission parameter is configured based on the QoS actually corresponding to the first terminal device, increasing a modulation and coding scheme MCS used by the first terminal device to transmit the first service.

24. The method according to any one of claims 21 to 23, wherein the method further comprises:
when the transmission parameter is configured based on the QoS actually corresponding to the first terminal device, reducing a time-frequency resource used by the first terminal device to transmit the first service.

25. The method according to any one of claims 21 to 24, wherein the method further comprises:
when the transmission parameter is configured based on the QoS actually corresponding to the first terminal device, reducing a quantity of times the first terminal device repeatedly transmits the first service.

26. The method according to any one of claims 21 to 25, wherein the method further comprises:
receiving a first data packet from the first terminal device; and
if a second terminal device fails to send the first data packet, sending indication information to the second terminal device, wherein the indication information indicates the second terminal device to skip retransmitting the first data packet.

27. The method according to claim 26, wherein the indication information is an acknowledgment ACK indication or an indication of skipping sending a retransmission, or the indication information is a packet data convergence protocol PDCP status report, and a state of the first data packet in the PDCP status report is that the first data packet is successfully sent.

28. The method according to any one of claims 21 to 27, wherein the method further comprises:
deduplicating and resorting data packets from the N terminal devices, and then sending deduplicated and resorted data packets to a core network device.

29. The method according to any one of claims 21 to 28, wherein the method further comprises:
when it is determined that the first terminal device works abnormally, improving QoS of at least one terminal device that works normally in the N terminal devices.

30. The method according to any one of claims 21 to 29, wherein if a quantity of terminal devices that work normally in the N terminal devices is greater than 1, QoS of the terminal devices that work normally remains unchanged, or QoS of all or some of the terminal devices that work normally is improved, and after improvement, average QoS of the terminal devices that work normally is lower than the QoS requirement of the first service.

31. The method according to any one of claims 21 to 30, wherein if the quantity of terminal devices that work normally in the N terminal devices is equal to 1, QoS of the terminal device is improved.

32. The method according to any one of claims 21 to 31, wherein that QoS of the terminal device is improved comprises:
reducing the MCS used by the terminal device to transmit the first service.

33. The method according to any one of claims 21 to 32, wherein that QoS of the terminal device is improved comprises:
increasing the time-frequency resource used by the terminal device to transmit the first service.

34. The method according to any one of claims 21 to 33, wherein that QoS of the terminal device is improved comprises:
increasing the quantity of times the terminal device repeatedly transmits the first service.

35. A communication apparatus, wherein the apparatus comprises:
a processing unit, configured to determine first information, wherein the first information is used to configure a data transmission rule of a first service; and
a first communication unit, configured to send the first information to a first terminal device in N terminal devices, wherein the N terminal devices are related to the first service, and N is an integer greater than 1.

36. The apparatus according to claim 35, wherein the apparatus further comprises a second communication unit; and
the second communication unit is configured to receive configuration information from a first core network device, and the configuration information indicates that the N terminal devices are related to the first service.

37. The apparatus according to claim 35 or 36, wherein the data transmission rule is determined based on a transmission mode of the first service.

38. The apparatus according to claim 37, wherein the processing unit is further configured to:
determine the transmission mode of the first service based on at least one of the following: quality of a channel between the processing unit and at least one of the N terminal devices, a working status of at least one of the N terminal devices, or a quality of service QoS requirement of the first service; or
determine the transmission mode of the first service based on first indication information from the first core network device, wherein the first indication information indicates the transmission mode corresponding to the first service.

39. The apparatus according to claim 37 or 38, wherein the transmission mode is one of the following four modes:
a first mode, wherein in the first mode, the N terminal devices comprise at least one primary terminal device and at least one backup terminal device, and the backup terminal device is configured to transmit the first service when all or some of the at least one primary terminal device is faulty;
a second mode, wherein in the second mode, all the N terminal devices transmit the first service, and the N terminal devices transmit a same data packet;
a third mode, wherein in the third mode, all the N terminal devices transmit the first service, and the N terminal devices transmit different data packets; and
a fourth mode, wherein in the fourth mode, all the N terminal devices transmit the first service, and a same data packet and different data packets exist in data packets transmitted by the first terminal device and data packets transmitted by a second terminal device in the N terminal devices.

40. The apparatus according to claim 39, wherein the first information comprises at least one of a first value corresponding to the first terminal device and a threshold, and the first value and the threshold are used to determine a data packet transmitted by the first terminal device;
the first information indicates whether the first terminal device sends a data packet of the first service;
the first information indicates the first terminal device to send a data packet whose sequence number is an odd number or an even number;
the first information indicates a traffic distribution proportion of the first terminal device, and the traffic distribution proportion is a proportion of a quantity of data packets to be sent by the first terminal device in k data packets to k; or
the first information indicates a range of a sequence number of a data packet to be sent by the first terminal device.

41. The apparatus according to claim 39, wherein the first communication unit is further configured to:
send a packet data convergence protocol PDCP status report or a first sequence number to the first terminal device, wherein the PDCP status report indicates a successfully received data packet and/or an unsuccessfully received data packet, and the first sequence number is a sequence number of a 1^{st} data packet to be sent by the first terminal device or a sequence number corresponding to a data packet to be sent by the first terminal device.

42. The apparatus according to claim 39, wherein the first information further comprises at least one of the following: a location of a data packet and a value of k, and the location of the data packet indicates a location of the data packet to be sent by the first terminal device in the k data packets.

43. The apparatus according to any one of claims 35 to 42, wherein the first communication unit is further configured to receive the data packet of the first service, and the data packet is from at least one of the N terminal devices;
the processing unit is further configured to deduplicate and resort the received data packet; and
the apparatus further comprises the second communication unit, and the second communication unit is configured to send a deduplicated and resorted data packet to a second core network device.

44. The apparatus according to any one of claims 35 to 43, wherein the first communication unit is further configured to receive a buffer status report BSR from the first terminal device, and the BSR indicates an amount of data buffered by the first terminal device; and
the processing unit is further configured to: determine, based on the data transmission rule and the BSR, a quantity of data packets to be sent by the first terminal device, and
allocate an uplink resource to the first terminal device based on the quantity of data packets to be sent by the first terminal device.

45. A communication apparatus, wherein the apparatus is applicable to a first terminal device or a chip of the first terminal device, and the apparatus comprises:
a first communication unit, configured to receive first information from an access network device, wherein the first information is used to configure a data transmission rule of a first service, the first service is related to N terminal devices, N is an integer greater than 1, and the N terminal devices comprise the first terminal device; and
a processing unit, configured to determine a to-be-sent data packet of the first service based on the data transmission rule, wherein the to-be-sent data packet is at least one data packet to be sent by the first terminal device, wherein
the first communication unit is further configured to send the to-be-sent data packet to the access network device.

46. The apparatus according to claim 45, wherein the data transmission rule is determined based on a transmission mode of the first service.

47. The apparatus according to claim 46, wherein the transmission mode is one of the following four modes:
a first mode, wherein in the first mode, the N terminal devices comprise at least one primary terminal device and at least one backup terminal device, and the backup terminal device is configured to transmit the first service when all or some of the at least one primary terminal device is faulty;
a second mode, wherein in the second mode, all the N terminal devices transmit the first service, and the N terminal devices transmit a same data packet;
a third mode, wherein in the third mode, all the N terminal devices transmit the first service, and the N terminal devices transmit different data packets; and
a fourth mode, wherein in the fourth mode, all the N terminal devices transmit the first service, and a same data packet and different data packets exist in data packets transmitted by the first terminal device and data packets transmitted by a second terminal device in the N terminal devices.

48. The apparatus according to any one of claims 45 to 47, wherein the first information comprises at least one of a first value corresponding to the first terminal device and a threshold, and the first value and the threshold are used to determine a data packet transmitted by the first terminal device;
the first information indicates whether the first terminal device sends a data packet of the first service;
the first information indicates the first terminal device to send a data packet whose sequence number is an odd number or an even number;
the first information indicates a traffic distribution proportion of the first terminal device, and the traffic distribution proportion is a proportion of a quantity of data packets to be sent by the first terminal device in k data packets to k; or
the first information indicates a range of a sequence number of a data packet to be sent by the first terminal device.

49. The apparatus according to claim 48, wherein the first communication unit is further configured to receive a packet data convergence protocol PDCP status report or a first sequence number from the access network device, wherein the PDCP status report indicates a successfully sent data packet and/or an unsuccessfully sent data packet, and the first sequence number is a sequence number of a 1^{st} data packet to be sent by the first terminal device or a sequence number corresponding to the data packet to be sent by the first terminal device; and
when determining the to-be-sent data packet of the first service based on the data transmission rule, the processing unit is specifically configured to:
determine the to-be-sent data packet based on the PDCP status report or the first sequence number.

50. The apparatus according to claim 48, wherein the first information further comprises at least one of the following: a location of a data packet and a value of k, and the location of the data packet indicates a location of the data packet to be sent by the first terminal device in the k data packets.

51. The apparatus according to any one of claims 45 to 50, wherein the apparatus further comprises a second communication unit; and
the second communication unit is configured to: before the processing unit determines the to-be-sent data packet of the first service based on the data transmission rule, receive M data packets of the first service, wherein M is an integer greater than 0, and the to-be-sent data packet is determined based on the M data packets.

52. The apparatus according to claim 51, wherein the processing unit is further configured to:
before the first communication unit sends the to-be-sent data packet to the access network device, number the to-be-sent data packet based on a receiving order of the M data packets or sequence numbers carried in the M data packets.

53. The apparatus according to claim 51 or 52, wherein the processing unit is further configured to: before the first communication unit sends the to-be-sent data packet to the access network device, buffer the M data packets, and
determine the to-be-sent data packet based on second configuration information and M; and
the first communication unit is further configured to send a first buffer status report BSR to the access network device, wherein the first BSR indicates a quantity of to-be-sent data packets.

54. The apparatus according to any one of claims 51 to 53, wherein the processing unit is further configured to: before the first communication unit sends the to-be-sent data packet to the access network device, buffer the to-be-sent data packet; and
the first communication unit is further configured to send a second buffer status report BSR to the access network device, wherein the second BSR indicates a quantity of buffered data packets.

55. A communication apparatus, wherein the apparatus comprises:
a communication unit, configured to receive first information, wherein the first information indicates a quality of service QoS requirement of a first service; and
a processing unit, configured to determine QoS actually corresponding to a first terminal device in N terminal devices, wherein the QoS of the first terminal device is lower than the QoS requirement of the first service, the N terminal devices are related to the first service, and N is an integer greater than 1.

56. The apparatus according to claim 55, wherein the first information comprises at least one of the following: 5G QoS identifier information, an allocation and retention priority, a guaranteed bit rate, and an aggregate maximum bit rate.

57. The apparatus according to claim 55 or 56, wherein the processing unit is further configured to:
when a transmission parameter is configured based on the QoS actually corresponding to the first terminal device, increase a modulation and coding scheme MCS used by the first terminal device to transmit the first service.

58. The apparatus according to any one of claims 55 to 57, wherein the processing unit is further configured to:
when the transmission parameter is configured based on the QoS actually corresponding to the first terminal device, reduce a time-frequency resource used by the first terminal device to transmit the first service.

59. The apparatus according to any one of claims 55 to 58, wherein the processing unit is further configured to:
when the transmission parameter is configured based on the QoS actually corresponding to the first terminal device, reduce a quantity of times the first terminal device repeatedly transmits the first service.

60. The apparatus according to any one of claims 55 to 59, wherein the communication unit is further configured to:
receive a first data packet from the first terminal device; and
if a second terminal device fails to send the first data packet, send indication information to the second terminal device, wherein the indication information indicates the second terminal device to skip retransmitting the first data packet.

61. The apparatus according to claim 60, wherein the indication information is an acknowledgment ACK indication or an indication of skipping sending a retransmission, or the indication information is a packet data convergence protocol PDCP status report, and a state of the first data packet in the PDCP status report is that the first data packet is successfully sent.

62. The apparatus according to any one of claims 55 to 61, wherein the processing unit is further configured to:
deduplicate and resort data packets from the N terminal devices; and
the communication unit is further configured to send deduplicated and resorted data packets of the N terminal devices to a core network device.

63. The apparatus according to any one of claims 55 to 62, wherein the processing unit is further configured to:
when it is determined that the first terminal device works abnormally, improve QoS of at least one terminal device that works normally in the N terminal devices.

64. The apparatus according to any one of claims 55 to 63, wherein if a quantity of terminal devices that work normally in the N terminal devices is greater than 1, QoS of the terminal devices that work normally remains unchanged, or QoS of all or some of the terminal devices that work normally is improved, and after improvement, average QoS of the terminal devices that work normally is lower than the QoS requirement of the first service.

65. The apparatus according to any one of claims 55 to 64, wherein if the quantity of terminal devices that work normally in the N terminal devices is equal to 1, QoS of the terminal device is improved.

66. The apparatus according to any one of claims 55 to 65, wherein when improving the QoS of the terminal device, the processing unit is specifically configured to:
reduce the MCS used by the terminal device to transmit the first service.

67. The apparatus according to any one of claims 55 to 66, wherein when improving the QoS of the terminal device, the processing unit is specifically configured to:
increase the time-frequency resource used by the terminal device to transmit the first service.

68. The apparatus according to any one of claims 55 to 67, wherein when improving the QoS of the terminal device, the processing unit is specifically configured to:
increase the quantity of times the terminal device repeatedly transmits the first service.

69. A communication apparatus, wherein the apparatus comprises a processor and an interface circuit, the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 10 or the method according to any one of claims 21 to 34 by using a logic circuit or by executing code instructions.

70. A communication apparatus, wherein the apparatus comprises a processor and an interface circuit, the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 11 to 20 by using a logic circuit or by executing code instructions.

71. A computer-readable storage medium, wherein the computer-readable storage medium is configured to store computer instructions; and when the computer instructions are run on a computer, the computer is enabled to perform the method according to any one of claims 1 to 10, or the computer is enabled to perform the method according to any one of claims 11 to 20, or the computer is enabled to perform the method according to any one of claims 21 to 34.

72. A computer program product storing instructions, wherein when the instructions are run by a processor, the method according to any one of claims 1 to 10, or the method according to any one of claims 11 to 20, or the method according to any one of claims 21 to 34 is implemented.
